(19) Europäisches Patentamt
European Patent Office
Office européen des brevets

(11) **EP 2 705 103 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(21) Anmeldenummer: **12720142.4**

(22) Anmeldetag: **04.05.2012**

(51) Int Cl.:
*C09J 5/02* (2006.01)     *C09J 7/10* (2018.01)
*B32B 27/08* (2006.01)    *B32B 27/16* (2006.01)
*B32B 27/30* (2006.01)    *B32B 27/32* (2006.01)
*B32B 27/40* (2006.01)    *C08G 18/48* (2006.01)
*C08G 18/66* (2006.01)    *C08G 18/75* (2006.01)
*C08J 5/12* (2006.01)     *C08G 18/12* (2006.01)
*C08G 18/22* (2006.01)    *C08G 18/32* (2006.01)
*C09J 123/16* (2006.01)   *C09J 175/08* (2006.01)

(86) Internationale Anmeldenummer:
**PCT/EP2012/058286**

(87) Internationale Veröffentlichungsnummer:
**WO 2012/152714 (15.11.2012 Gazette 2012/46)**

(54) **VERFAHREN ZUR ERHÖHUNG DER ADHÄSIVEN EIGENSCHAFTEN VON HAFTKLEBEMASSEN AUF UNTERGRÜNDEN MITTELS PLASMABEHANDLUNG**

METHOD FOR INCREASING THE ADHESIVE PROPERTIES OF PRESSURE-SENSITIVE ADHESIVE COMPOUNDS ON SUBSTRATES BY WAY OF PLASMA TREATMENT

PROCÉDÉ DE RENFORCEMENT DES PROPRIÉTÉS ADHÉSIVES DE SUBSTANCES AUTO-ADHÉSIVES SUR DES SUBSTRATS AU MOYEN D'UN TRAITEMENT PAR PLASMA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2011   DE 102011075468**
**06.05.2011   DE 102011075470**

(43) Veröffentlichungstag der Anmeldung:
**12.03.2014   Patentblatt 2014/11**

(73) Patentinhaber: **tesa SE**
**22848 Norderstedt (DE)**

(72) Erfinder:
• **SCHUBERT, Thomas**
**20251 Hamburg (DE)**
• **KOOPS, Arne**
**23881 Neu-Lankau (DE)**
• **REICH, Sarah**
**22049 Hamburg (DE)**

(56) Entgegenhaltungen:
EP-A1- 1 978 067     EP-A2- 2 305 389
WO-A1-03/020517      US-A1- 2010 151 236

**Beschreibung**

Die Erfindung bezieht sich auf ein Verfahren zur Erhöhung der adhäsiven Eigenschaften von Haftklebemassen auf Untergründen mittels Plasmabehandlung.

Grundsätzlich gibt es für Haftklebemassen das Problem der gleichzeitig geforderten Optimierung von Volumen und Oberfläche, also Kohäsion und Adhäsion. In vielen Fällen ist die Schwäche einer klebenden Verbindung die Oberfläche, also die Adhäsion.

Als "Adhäsion" wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche, die als Anfassklebrigkeit (dem so genannten "Tack") und als Klebkraft bestimmbar ist. Um die Adhäsion einer Klebemasse gezielt zu beeinflussen, werden der Klebemasse häufig Weichmacher und/oder klebkraftsteigernde Harze (so genannte "Tackifier") zugesetzt.

Eine einfache Definition der Adhäsion kann "die Wechselwirkungsenergie pro Einheitsfläche [in mN/m] sein, wobei diese aufgrund experimenteller Einschränkungen wie Unkenntnis der wahren Kontaktflächen nicht messbar ist. Weiterhin wird oft die Oberflächenenergie (OFE) beschrieben mit "polaren" und "unpolaren" Komponenten. Dieses vereinfachende Modell hat sich in der Praxis durchgesetzt. Gemessen werden diese Energie und ihre Komponenten oft mittels Messung der statischen Kontaktwinkel unterschiedlicher Testflüssigkeiten. Den Oberflächenspannungen dieser Flüssigkeiten werden polare und unpolare Anteile zugeordnet. Aus den beobachteten Kontaktwinkeln der Tropfen auf der Prüfoberfläche werden die polaren und unpolaren Anteile der Oberflächenenergie der Prüfoberfläche ermittelt. Dies kann zum Beispiel nach dem OWKR-Modell erfolgen. Eine industriell übliche alternative Methode ist die Bestimmung mittels Testtinten nach DIN ISO 8296.

Im Kontext solcher Diskussionen werden oft die Begriffe "polar" und "hochenergetisch" gleich gesetzt, ebenso die Begriffe "unpolar" und "niederenergetisch". Dahinter steht die Erkenntnis, dass polare Dipolkräfte vergleichsweise stark sind gegenüber sogenannten "dispersen" oder unpolaren Wechselwirkungen, die ohne Beteiligung permanenter molekularer Dipole aufbaut werden. Die Grundlage dieses Modells der Grenzflächenenergie und Grenzflächenwechselwirkungen ist die Vorstellung, dass polare Komponenten nur mit polaren wechselwirken und unpolare nur mit unpolaren.

Jedoch kann eine Oberfläche auch kleine oder mittlere polare Anteile an der Oberflächenenergie aufweisen, ohne dass die Oberflächenenergie "hoch" ist. Ein Richtwert kann sein, dass, sobald der polare Anteil der OFE größer ist als 3 mN/m die Oberfläche im Sinne dieser Erfindung als "polar" zu bezeichnen ist. Dies entspricht in etwa der praktischen unteren Nachweisgrenze.

Grundsätzlich gibt es keine harten Grenzen für Begriffe wie hoch- und niederenergetisch. Für den Zweck der Diskussion wird die Grenze bei 38 mN/m beziehungsweise 38 dyn/cm gesetzt. Dies ist ein Wert, ab dem beispielsweise die Bedruckbarkeit einer Oberfläche meist hinreichend ist. Zum Vergleich kann man die Oberflächenspannung (=Oberflächenenergie) von reinem Wasser betrachten, diese liegt bei ca. 72 mN/m (unter anderem temperaturabhängig).

Insbesondere auf niederenergetischen Substraten wie PE, PP oder EPDM, aber auch vielen Lacken gibt es große Probleme bei der Erreichung zufriedenstellender Adhäsion, sowohl bei Verwendung von Haftklebemassen und anderen Klebstoffen oder Beschichtungen.

Ebenso ist bekannt, dass polare Haftklebemassen wie Acrylatmassen als Klasse ein befriedigendes Verhalten auf hochenergetischen Untergründen zeigen, jedoch oft auf sehr niederenergetischen Untergründen versagen. Es gibt andere Massen zum Beispiel auf Basis von Natur- oder Synthesekautschuk, die verbesserte Verklebungen sowohl auf nieder- wie hochenergetischen Untergründen bieten.

Weiterhin haben insbesondere Acrylatmassen auch das typische Verhalten des "Aufziehens", also einer oft Tage dauernden Prozesses des "Auffliessens" auf das Substrat, bis die Endfestigkeit der Verklebung erreicht ist. In den meisten Fällen ist dies ein unerwünschtes Verhalten.

Und auch wenn die Verklebung auf hochenergetischen beziehungsweise polaren Substraten wie zum Beispiel Stahl allgemein als eher unproblematisch gilt, kann noch lange nicht jede Haftklebemasse optimal wechselwirken. Dies sieht man daran, dass keinesfalls jede Haftklebemasse in Schältests ein kohäsiv versagendes Bruchbild auf Stahl zeigt, was anzeigt, dass die Adhäsion versagt.

In diesem Zusammenhang wird es oft auch als wünschenswert gesehen, Klebemassen zu entwickeln, die über unterschiedliche Substrate ein vergleichbares Verhalten zeigen.

Insbesondere unterschiedliche Substrate miteinander zu verkleben (polar auf unpolar), zum Beispiel bei beidseitig klebenden Klebebändern, erfordert Optimierung eben auf unterschiedlichen Substraten. Diese Probleme könnten auch auftreten bei der Beklebung zweier Substrate mit unterschiedlichen Eigenschaften in einer Ebene (zum Beispiel neben- oder aufeinander gelegt) mit einem einseitigen Klebeband.

Insbesondere für den Bereich der Hochleistungs- und Montageklebebänder gibt es trägerlose, viskoelastische Klebebänder. "Trägerlos" bedeutet in diesem Zusammenhang, dass keine Schicht nur für den strukturellen Zusammenhalt nötig ist, das Klebeband ist also für den spezifizierten Einsatz in sich ausreichend kohäsiv. Es ist nicht nötig, eine Trägerfolie oder ähnliches wie Vlies oder Gewebe, zu verwenden. Auch diese Klebebänder basieren meist auf hochvernetzten Acrylatklebemassen. Des Weiteren sind diese Haftklebebänder meistens verhältnismäßig dick, typischerweise über 300 μm.

Eine so bezeichnete viskoelastische Polymerschicht kann als sehr hochviskose Flüssigkeit angesehen werden, die unter Druckbelastung das Verhalten des Fließens (auch als "Kriechen" bezeichnet) zeigt. Solche viskoelastischen Polymere beziehungsweise eine solche Polymerschicht besitzen in besonderem Maße die Fähigkeit, bei langsamer Krafteinwirkung die auf sie einwirkenden Kräfte zu relaxieren: sie sind in der Lage, die Kräfte in Schwingungen und/oder Verformungen (die insbesondere auch - zumindest zum Teil - reversibel sein können) zu dissipieren, somit die einwirkenden Kräfte "abzupuffern", und eine mechanische Zerstörung durch die einwirkenden Kräfte bevorzugt zu vermeiden, vorteilhaft aber mindestens zu verringern oder aber den Zeitpunkt des Eintretens der Zerstörung zumindest hinauszögern. Im Falle einer sehr schnell einwirkenden Kraft zeigen viskoelastische Polymere üblicherweise ein elastisches Verhalten, also das Verhalten einer vollständig reversiblen Verformung, wobei Kräfte, die über das Elastizitätsvermögen der Polymere hinausgehen, zu einem Bruch führen können. Im Gegensatz hierzu stehen elastische Materialien, die auch bei langsamer Krafteinwirkung das beschriebene elastische Verhalten zeigen. Durch Beimischungen, Füllstoffe, Schäumung oder ähnliches können solche viskoelastischen Klebmassen in ihren Eigenschaften noch stark variiert werden.

Insbesondere ist es oft vorteilhaft, einen syntaktischen Schaum zu erzeugen. Wenn dies beispielsweise durch die Zugabe von expandierbaren Mikroballons geschieht, die erst nach Zugabe expandieren, wird im Rahmen dieser Offenbarung von "Schäumung" gesprochen. Wenn stattdessen vorexpandierte oder nicht expandierbare hohle Füllstoffe wie Glashohlkugeln zugegeben werden, wird im Rahmen dieser Offenbarung von "Schäumung" oder "Füllung" gesprochen. Sowohl "Schäumung" als auch eine "Füllung" erzeugen einen syntaktischen Schaum.

Aufgrund der elastischen Anteile der viskoelastischen Polymerschicht, die wiederum wesentlich zu den klebtechnischen Eigenschaften von Klebebändern mit solch einer viskoelastischen Trägerschicht beitragen, kann die Spannung zum Beispiel einer Zug- oder Scherbeanspruchung nicht komplett abgebaut werden. Dies wir durch das Relaxationsvermögen ausgedrückt, welches definiert ist als ((Spannung(t=0) - Spannung (t)/ Spannung (t=0))*100%. Typischerweise zeigen viskoelastische Trägerschichten ein Relaxationsvermögen von mehr als 50 % auf.

Wiewohl jede Klebmasse viskoelastischer Natur ist, werden für trägerlose Hochleistungsklebebänder bevorzugt Klebmassen eingesetzt, welche diese besonderen Relaxierungseigenschaften zeigen.

Besonders schwierig zu lösen ist das Problem der gleichzeitigen Optimierung von Adhäsion und Kohäsion für einschichtige trägerlose Selbstklebebänder, da man hier keine spezielle Beschichtung der Seiten des Klebebands für die jeweiligen Untergründe vornehmen kann.

Man kann nun aber nicht beliebig einfach eine Haftklebemasse in der chemischen Formulierung ändern zur Optimierung der Adhäsion, da viele Volumeneigenschaften mit beeinflusst werden. Dies kann sein zum Beispiel Viskosität, Beständigkeit gegen dynamische Schocks, Lösemittel, Temperatur, oder man stößt schlicht auf Grenzen der Herstellung/Polymerisierung. Man ist also oft in der Praxis auf eine bestimmte Basischemie beschränkt, mit der dann unter anderem die Adhäsion sichergestellt werden muss.

Es kann zudem sein, dass eine Haftklebemasse, zum Beispiel ein viskoelastisches Dickschichtprodukt sowohl bei hohen als auch bei niedrigen Temperaturen versagt. Bei tiefen Temperaturen liegt dies typischerweise am Erreichen des Glasübergangspunkts und einer daraus resultierenden Verhärtung. Ein häufiges Bruchbild ist dabei adhäsives Versagen. Gleichzeitig kann das Produkt auch bei hohen Temperaturen erweichen, so dass bei Scherversuchen eine unzureichende Festigkeit beziehungsweise Standzeit gemessen wird, wiederum bei einem Bruchbild Adhäsionsversagen.

Die physikalische Vorbehandlung von Untergründen (zum Beispiel durch Flamme, Corona, Plasma) zur Verbesserung von Verklebungsfestigkeiten ist vor allem bei flüssigen Reaktivklebstoffen üblich. Eine Aufgabe der physikalischen Vorbehandlung kann dabei auch eine Reinigung des Untergrunds sein, beispielsweise von Ölen, oder ein Aufrauen zur Vergrößerung der effektiven Fläche.

Bei einer physikalischen Vorbehandlung spricht man meist von einer "Aktivierung" der Oberfläche. Dies impliziert meist eine unspezifische Wechselwirkung, im Gegensatz beispielsweise zu einer chemischen Reaktion nach dem Schlüssel-Schloss-Prinzip. Eine Aktivierung impliziert meistens eine Verbesserung von Benetzbarkeit, Bedruckbarkeit oder Verankerung einer Beschichtung.

Bei Selbstklebebändern ist ein Auftragen eines Haftvermittlers auf den Untergrund üblich. Dies ist aber oft ein fehleranfälliger, aufwändiger, manueller Schritt.

Der Erfolg bei der Verbesserung der Adhäsion von Haftklebemassen durch physikalische Vorbehandlung des Untergrunds (Flamme, Corona, Plasma) ist nicht universell, da unpolare Klebmassen wie zum Beispiel Natur- oder Synthesekautschuk typischerweise nicht davon profitieren.

Die DE 10 2007 063 021 A1 beschreibt eine Aktivierung von Klebmassen mittels einer filamentären Coronabehandlung. Der Effekt der Coronabehandlung beschränkte sich im Wesentlich auf eine Erhöhung der Scherstandzeiten (SSZ). Weitere klebtechnischen Eigenschaften konnten nicht verbessert werden. Zurückzuführen ist dies wahrscheinlich auf die Bildung von Abbauprodukten durch Elektronenbeschuss in einer Coronaentladung. Insbesondere wurde eine unveränderte oder sogar reduzierte Klebkraft beobachtet. Dem Fachmann ist es auch in der Tat klar, dass durch Erhöhung der Scherstandzeiten einer Haftklebemasse nicht trivialerweise auch eine Erhöhung der Klebkraft erreicht wird. Es ist auch nicht zu erwarten, dass die gelehrte oxidativ-polare Modifizierung der Klebmasse eine Verbesserung auf unpolaren Untergründen bringen kann. Zudem ist eine Coronabehandlung mit vielen weiteren Einschränkungen verbunden, wie später noch ausgeführt wird.

Die bisherigen im Stand der Technik gelehrten Lösungen zur Erhöhung der Klebkraft einer ausgeformten viskoelastischen Haftklebeschicht beziehen sich auf das Hinzukaschieren ein oder mehrerer Schichten einer Klebmasse, so dass man einen mehrschichtigen Aufbau erhält. Die offensichtlichen Nachteile eines Mehrschichtaufbaus sind der erhöhte Aufwand bei der Fertigung und die Anzahl der Prozessschritte. Bei dieser Art der Lösung können grundsätzlich Delaminationsprobleme zwischen den Schichten auftreten, da die Interlaminathaftung nicht auf starken kovalenten chemischen Wechselwirkungen beruht, sondern auf unspezifischen Wechselwirkungen allgemeiner polarer Natur. Dabei werden Coronabehandlungen auf inneren Grenzflächen von Klebebändern zur Verbesserung von Interlaminathaftung beschrieben, zum Beispiel in der WO 2006/027389 A1, der DE 10 2006 057 800 A1 oder der EP 2 062 951 A1.

Grundsätzlich sind auch chemisch-physikalische Modifikationen von Untergründen bekannt mit anschließendem Aufbringen von Klebebändern, wobei die Klebebänder selbst nicht modifiziert werden. In der DE 695 31 394 T2 wird beispielsweise beschrieben, wie eine chemisch-physikalische Oxidation einer Polymeroberfläche in Kombination mit Aufbringen eines Kopplungsmittels in einem elektrischen Feld zur Haftungsverbesserung einer Oberfläche verwendet werden kann. Es wird auch das Aufbringen eines unmodifizierten Klebebandes auf die so modifizierte Oberfläche beansprucht.

Ein Verfahren zur Verbesserung der Adhäsion von Haftklebemassen ist also wünschenswert, wobei das Verfahren:

-      möglichst alle Aspekte der Adhäsion wie Klebkraft, Scherfestigkeit und Auffliessen positiv beeinflussen sollte,
-      keine Einschränkungen auf bestimmte Klassen von Untergründen oder Haftklebemassen haben sollte,
-      und verfahrenstechnisch für die Aufgabe gut geeignet sein sollte.

Aus der US 2010/151236 A1 ist ein Verfahren zur Erhöhung der Adhäsion zwischen einer Haftklebemassenschicht, die eine einem Substrat abgewandte und eine dem Substrat zugewandte Oberfläche aufweist, und der Oberfläche eines Substrats bekannt, wobei die dem Substrat zugewandte Oberfläche der Haftklebemassenschicht und die Oberfläche des Substrats, die mit der Haftklebemassenschicht bedeckt ist, jeweils mit Atmosphärendruckplasma behandelt werden. Geschäumte Acrylathaftklebemassenschichten als Haftklebemassen werden nicht erwähnt.

Aufgabe der Erfindung ist es, die angegebenen positiven Effekte bei physikalischer Oberflächenmodifikation von Haftklebmassen und Untergründen zu finden, um hochfeste Verbindungen zu erreichen. Kern der Aufgabe ist die Erzielung einer hohen Verankerung zwischen der haftklebrigen Schicht und des Untergrunds.

Gelöst werden diese Aufgaben durch ein Verfahren, wie es gemäß Hauptanspruch dargestellt ist. Gegenstand der Unteransprüche sind dabei vorteilhafte Weiterbildungen des Erfindungsgegenstands.

Demgemäß betrifft die Erfindung ein Verfahren zur Erhöhung der Adhäsion zwischen einer Haftklebemassenschicht, die eine dem Untergrund abgewandte und eine dem Untergrund zugewandte Oberfläche aufweist, und der Oberfläche eines Untergrunds, wobei die dem Untergrund zugewandte Oberfläche der Haftklebemassenschicht und die Oberfläche des Untergrunds, die mit der Haftklebemassenschicht bedeckt ist, jeweils mit Atmosphärendruckplasma behandelt werden.

Überraschend an dem erfindungsgemäßen Verfahren ist, dass für sehr viele Klebeband-Substrat-Kombinationen eine signifikante Erhöhung sowohl der Klebkraft als auch der Scherfestigkeit und weiterer Adhäsionseigenschaften zu beobachten ist. Insbesondere gilt dies auch für niederenergetische Substrate. Diese Verbesserung stellt sich

unabhängig davon ein, ob der Untergrund sehr glatt, rau oder auch strukturiert/texturiert ist.

Das erfindungsgemäße Verfahren ist überraschend robust und einfach in der Anwendung.

Bevorzugt wird das Plasma mittels einer oder mehrerer Düsen aufgebracht, bevorzugt bei Betrieb mit Druckluft oder $N_2$.
Besonders bevorzugt wird das Plasma mittels einer Rotationsdüse aufgebracht, besonders bevorzugt bei Betrieb mit Druckluft.

Moderne indirekte Plasmatechniken basieren oft auf einem Düsenprinzip. Hierbei kann die Düse rund oder linienförmig ausgeführt sein, teilweise wird mit Rotationsdüsen gearbeitet, ohne hier eine Einschränkung vornehmen zu wollen. Ein solches Düsenprinzip ist vorteilhaft aufgrund seiner Flexibilität und seiner inhärent einseitigen Behandlung. Solche Düsen, beispielsweise der Firma Plasmatreat, sind industriell weit verbreitet zur Vorbehandlung von Untergründen vor einer Verklebung. Nachteilig sind die indirekte und weniger effiziente da entladungsfreie Behandlung, und dadurch die reduzierten Bahngeschwindigkeiten. Die übliche Bauform einer Runddüse ist jedoch besonders gut geeignet, schmale Warenbahnen zu behandeln, wie beispielsweise ein Klebeband mit einer Breite von wenigen cm.

Es sind verschiedene Plasmaerzeuger auf dem Markt, die sich in der Technik zur Plasmaerzeugung, der Düsengeometrie und der Gasatmosphäre unterscheiden. Obwohl sich die Behandlungen unter anderem in der Effizienz unterscheiden, sind die grundsätzlichen Effekte meist ähnlich und sind vor allem durch die eingesetzte Gasatmosphäre bestimmt. Eine Plasma-Behandlung kann in verschiedenen Atmosphären stattfinden, wobei die Atmosphäre auch Luft umfassen kann. Die Behandlungsatmosphäre kann eine Mischung verschiedener Gase sein, ausgewählt unter anderem aus $N_2$, $O_2$, $H_2$, $CO_2$, Ar, He, Ammoniak, wobei zudem Wasserdampf oder andere Bestandteile beigemischt sein können. Durch diese beispielhafte Auflistung wird keine Einschränkung vorgenommen.

Gemäß einer vorteilhaften Ausführungsform der Erfindung bilden folgende reine oder Mischungen von Prozessgasen eine Behandlungsatmosphäre: $N_2$, Druckluft, $O_2$, $H_2$, $CO_2$, Ar, He, Ammoniak, Ethylen, wobei zudem Wasserdampf oder andere flüchtige Bestandteile zugesetzt sein können. Bevorzugt werden $N_2$ und Druckluft.

Grundsätzlich kann man der Atmosphäre auch beschichtende oder polymerisierende Bestandteile beimischen, als Gas (zum Beispiel Ethylen) oder Flüssigkeiten (vernebelt als Aerosol). Es ist fast keine Einschränkung der in Frage kommenden Aerosole gegeben. Besonders die indirekt arbeitenden Plasmatechniken sind für den Einsatz von Aerosolen geeignet, da hier keine Verschmutzung der Elektroden droht.

Da die Effekte einer Plasmabehandlung chemischer Natur sind und eine Veränderung der Oberflächenchemie im Vordergrund steht, kann man die oben beschriebenen Methoden auch als chemisch-physikalische Behandlungsmethoden beschreiben. Obwohl sich Unterschiede im Detail ergeben können, ist im Sinne dieser Erfindung keine besondere Technik hervorzuheben, weder von der Art der Plasmaerzeugung noch der Bauart.

Weiterhin bevorzugt ist die Aufbringung des Plasmastrahls mittels Rotation der Düsenspitze. Der Plasmastrahl überstreicht dann in einem vorgegebenen Winkel kreisförmig das Substrat und bietet vorteilhaft eine gute Behandlungsbreite für Klebebänder. Durch die Rotation überstreicht der Behandlungsstrahl je nach Verfahrgeschwindigkeit mehrfach die gleichen Stellen, führt also implizit eine Mehrfachbehandlung durch.

Eine ebenfalls bevorzugte Variante der Plasmabehandlung ist die Verwendung eines feststehenden Plasmastrahls ohne Rotationsdüse.

Eine ebenfalls bevorzugte Plasmabehandlung verwendet eine seitlichen Anordnung von mehreren Düsen, versetzt, wenn nötig, zur lückenlosen, teilweise überlappenden Behandlung in hinreichender Breite. Nachteilig hierbei ist die nötige Anzahl an Düsen, typischerweise müssten anstelle einer Rotationsdüse zwei bis vier nicht-rotierende Runddüsen eingesetzt werden.

Die Bauform einer Rund-Düse ist im Allgemeinen bevorzugt für Verklebungen von schmalen Klebebändern. Linear-Düsen sind aber auch geeignet.

Gemäß einer weiteren vorteilhaften Ausführungsform der Erfindung beträgt der Behandlungsabstand 1 bis 100 mm, bevorzugt 3 bis 50 mm, besonders bevorzugt 4 bis 20 mm.

Weiter vorzugsweise beträgt die Behandlungsgeschwindigkeit 0 bis 200 m/min, bevorzugt 1 bis 50 m/min, besonders bevorzugt 2 bis 20 m/min.

Besonders bevorzugt ist eine Universal-Behandlung mittels Rotationsdüse bei 9 bis 12 mm Abstand zwischen Düse und der zu behandelnden Oberfläche bei einer lateralen Relativbewegung zwischen Düse und Substrat von 4 bis 6 m/min.

Selbstverständlich muss die Behandlung innerhalb eines Bereiches erfolgen, in dem das Gas reaktiv ist, beziehungsweise innerhalb eines Abstandes (zum Beispiel zu einer Düse), in dem das Gas noch reaktiv ist. Bei einer Düse umfasst dieser Bereich den Wirkbereich des Plasmastrahls.

Die Plasmabehandlung der Oberflächen kann auch mehrmals stattfinden.

Eine Behandlung kann mehrfach hintereinander erfolgen, um die gewünschte Intensität zu erreichen. Dies passiert stets bei der bevorzugten Rotationsbehandlung oder bei teilweise überlappenden Düsenanordnungen.

Die nötige Behandlungsintensität kann zum Beispiel durch mehrere Durchfahrten unter einer Düse oder durch Anordnung von mehreren Düsen hintereinander erzielt werden. Die Mehrfachbehandlung kann auch zur Auffrischung der Behandlung genutzt werden. Möglich ist auch, dass mindestens eine der Behandlungen in mehrere Einzelbehandlungen aufgeteilt sein kann.

Grundsätzlich werden beide Grenzflächen behandelt, also Klebeband und Untergrund. Bei beidseitigen Klebebändern kann dies für beide Seiten gelten.

Der Zeitpunkt ist nicht vorgegeben, jedoch bevorzugt kurz vor der Verklebung.

Bei einer Behandlung direkt vor der Verklebung kann der zeitlich Abstand zur Verklebung <1 s sein, bei einer Inline-Behandlung vor dem Verkleben im Bereich von Sekunden bis Minuten, bei einer Offline-Behandlung im Bereich von Stunden bis Tagen, und bei einer Behandlung im Herstellungsprozess des Klebebands im Bereich von Tagen bis vielen Monaten.

Wie die meisten physikalischen Behandlungen kann eine Plasmabehandlung im Laufe der Zeit abklingen. Dies kann allerdings stark von den Details der Behandlung und des Untergrunds und des Klebebandes abhängen. Offensichtlich ist während eines möglichen Abklingens die Adhäsion noch verbessert gegenüber dem unbehandelten Zustand. Grundsätzlich ist die verbesserte Adhäsion auch in diesem Zeitraum ein Teil dieser Lehre.

Grundsätzlich kann eine Behandlung durch eine wiederholte Behandlung erzeugt werden oder aufgefrischt werden.

Der zeitliche Abstand zwischen den Mehrfachbehandlungen kann also reichen von ca. 0,1 s (während der Rotation der Düse) bis hin zu ca. 1 Jahr (wenn ein Produkt behandelt ausgeliefert wird, mit einer Auffrischbehandlung vor der Anwendung).

Grundsätzlich sind die Behandlungen der beiden Grenzflächen unabhängig voneinander in Ort und Zeit. Beispielsweise kann eine Behandlung in einem ersten Schritt erfolgen, die zweite Behandlung in einem zweiten Schritt. Eine oder beide dieser Behandlungen kann inline mit dem Verkleben erfolgen.

Wie viele Einzeldüsen oder sonstige Plasmaerzeuger für eine einzige oder alle Behandlungen verwendet werden, ist nicht eingeschränkt.

Wie viele Einzelbehandlungen mit der oder den Plasmaerzeugern durchgeführt werden, ist nicht eingeschränkt.

Beispielsweise wäre die Vorbehandlung einer der relevanten Oberflächen mit einem bestimmten Plasmaerzeuger denkbar, wobei zu einem späteren Zeitpunkt mit einem sich unterscheidenden Plasmaerzeuger die Behandlung ergänzt oder aufgefrischt wird. Beispielsweise könnte auch die Oberfläche bereits mittels Flamme oder Corona vorbehandelt gewesen sein, bevor sie mit dem hier gelehrten Verfahren behandelt wird. Beispielsweise werden Kunststoffteile oder Folien herstellerseitig manchmal mit einer physikalischen Vorbehandlung ausgerüstet.

In einer Variante der Erfindung wird das Plasma mit einer Plasmadüseneinheit mit zusätzlicher Einleitung eines Precursormaterials in den Arbeitsgasstrom oder in den Plasmastrahl aufgetragen. Die Beaufschlagung kann dabei zeitlich versetzt oder gleichzeitig erfolgen.

Ein Atmosphärendruckplasma (und eine Oberflächenbehandlung mittels desselben) unterscheidet sich wesentlich von einer Coronaentladung (und einer Oberflächenbehandlung mittels derselben).

Eine Coronabehandlung ist als eine durch hohe Wechselspannung zwischen zwei Elektroden erzeugte Oberflächenbehandlung mit filamentären Entladungen definiert, wobei die diskreten Entladungskanäle auf die zu behandelnde Oberfläche treffen, siehe dazu auch Wagner et al., Vacuum, 71 (2003), Seiten 417 bis 436. Ohne weitere Qualifizierung ist als Prozessgas Umgebungsluft anzunehmen.

Fast immer wird das Substrat im Entladungsraum zwischen einer Elektrode und einer Gegenelektrode platziert oder hindurchgeführt, was als "direkte" physikalische Behandlung definiert ist. Bahnförmige Substrate werden dabei typischerweise zwischen einer Elektrode und einer geerdeten Walze durchgeführt.

Insbesondere wird meist unter dem Begriff "Corona" eine "dielektrische Barrierenentladung" (engl. dielectric barrier discharge, DBD) verstanden. Dabei besteht mindestens eine der Elektroden aus einem Dielektrikum, also einem Isolator, oder ist mit einem solchen beschichtet oder überzogen.

Die Behandlungsintensität einer Coronabehandlung wird als "Dosis" in [Wmin/m$^2$] angegeben, mit der Dosis D=P/b*v, mit P=elektrischer Leistung [W], b=Elektrodenbreite [m], und v=Bahngeschwindigkeit [m/min].

Fast immer wird das Substrat im Entladungsraum zwischen einer Elektrode und einer Gegenelektrode platziert oder hindurchgeführt, was als "direkte" physikalische Behandlung definiert ist. Bahnförmigen Substrate werden dabei typischerweise zwischen einer Elektrode und einer geerdeten Walze durchgeführt. Manchmal wird noch der Begriff einer "ausgeblasenen Corona" beziehungsweise "einseitigen Corona" verwendet. Dies ist nicht vergleichbar mit einem Atmosphärendruckplasma, da sehr unregelmäßige Entladungsfilamente zusammen mit einem Prozessgas "ausgeblasen" werden, und keine stabile, wohldefinierte, effiziente Behandlung möglich ist.

"Atmosphärendruckplasma" ist als ein elektrisch aktiviertes, homogenes, reaktives Gas, welches sich nicht im thermischen Equilibrium befindet, mit einem Druck nahe dem Umgebungsdruck definiert. Durch die elektrischen Entladungen und durch Ionisierungsprozesse im elektrischen Feld wird das Gas aktiviert und hochangeregte Zustände in den Gasbestandteilen erzeugt. Das verwendete Gas oder die Gasmischung wird als Prozessgas bezeichnet. Grundsätzlich kann man der Plasmaatmosphäre auch beschichtende oder polymerisierende Bestandteile als Gas oder Aerosol beimischen.

Der Begriff "homogen" deutet darauf hin, dass keine diskreten, inhomogenen Entladungskanäle auf die Oberfläche des zu behandelnden Substrats treffen (auch wenn diese im Erzeugungsraum vorhanden sein können).

Die Einschränkung "nicht im thermischen Equilibrium" bedeutet, dass die Ionentemperatur sich von der Elektronentemperatur unterscheiden kann. Bei einem thermisch erzeugten Plasma wären diese im Gleichgewicht (siehe dazu auch zum Beispiel Akishev et al., Plasmas and Polymers, Vol. 7, No. 3, Sept. 2002).

Bei der physikalischen Behandlung einer Oberfläche mittels Atmosphärendruckplasma findet die elektrische Entladung meist in einem von der Oberfläche getrennten Raum statt. Das Prozessgas wird dann durch diesen Raum geführt, elektrisch aktiviert und dann als Plasma meist durch eine Düse auf die Oberfläche geleitet. Die Reaktivität des Plasmastrahls klingt meist nach Austritt zeitlich schnell ab, räumlich typischerweise nach Millimetern bis Zentimetern. Das austretende abklingende Plasma wird oft als englisch "afterglow" bezeichnet. Die Lebenszeit und nutzbare Strecke des austretenden Plasmas hängt von molekularen Details und der genauen Plasmaerzeugung ab.

Diese Art von physikalischer Behandlung wird als "indirekt" bezeichnet, wenn die Behandlung nicht am Erzeugungsort der elektrischen Entladungen vorgenommen wird. Die Behandlung der Oberfläche findet bei oder nahe bei Atmosphärendruck statt, wobei jedoch der Druck im elektrischen Entladungsraum erhöht sein kann.

Es sind aber beispielsweise auch Konzepte zur Erzeugung von Durchführung von indirekten Plasmabehandlungen bekannt, in denen die elektrischen Entladungen im Gasstrom außerhalb einer Düse stattfinden und ebenfalls eine Plasmastrahlbehandlung bereitstellen.

Ebenso bekannt sind homogene Atmosphärendruckplasmen bei denen die Behandlung im Entladungsraum stattfindet, bezeichnet als homogene Glimmentladung bei Atmosphärendruck (englisch "glow discharge plasma", siehe zum Beispiel T Yokoyama et al 1990 J. Phys. D: Appl. Phys. 23 1125).

Bestandteile des Athmosphärendruckplasmas können sein:

- Hochangeregte atomare Zustände
- Hochangeregte molekulare Zustände
- Ionen
- Elektronen
- Unveränderte Bestandteile des Prozessgases

Bevorzugt ist der Einsatz marktüblicher Systeme zur Erzeugung von Atmosphärendruckplasma. Die elektrischen Entladungen können zwischen Metallelektroden stattfinden, aber auch zwischen Metall-Dielektrikum oder aber erzeugt werden durch piezoelektrische Entladung oder weiteren Methoden. Einige beispielhafte kommerzielle Systeme sind Plasma-Jet (Plasmatreat GmbH, Deutschland), Plasma-Blaster (Tigres GmbH, Deutschland), Plasmabrush und Piezobrush (Reinhausen, Germany), Plasmaline (VITO, Belgien), oder ApJet (ApJet, Inc., USA). Die genannten Systeme operieren mit unterschiedlichen Prozessgasen wie Luft, Stickstoff oder Helium und unterschiedlichen resultierenden Gastemperaturen.

Bevorzugt ist das Verfahren der Plasmatreat GmbH (Steinhagen, Deutschland), beschrieben beispielsweise in folgendem Zitat aus der WO 2005/117507 A2:

"Aus dem Stand der Technik der EP 0 761 415 A1 und der EP 1 335 641 A1 ist eine Plasmaquelle bekannt, bei der mittels einer unter Anlegen einer hochfrequenten Hochspannung in einem Düsenrohr zwischen einer Stiftelektrode und einer Ringelektrode mittels einer nicht-thermischen Entladung aus dem Arbeitsgas ein Plasmastrahl erzeugt wird, der aus der Düsenöffnung austritt. Dieser nicht-thermische Plasmastrahl weist bei einer geeignet eingestellten Strömungsrate keine elektrischen Streamer auf, so dass nur der energiereiche, aber niedrig temperierte Plasmastrahl auf die Oberfläche eines Bauteils gerichtet werden kann. Streamer sind dabei die Entladungskanäle, entlang derer die elektrische Entladungsenergie während der Entladung verläuft.

Zur Charakterisierung des Plasmastrahls kann auch die hohe Elektronentemperatur, die niedrige Ionentemperatur und die hohe Gasgeschwindigkeit herangezogen werden."

Bei einer Coronaentladung nach obiger Definition bilden sich durch die angelegte hohe Spannung filamentäre Entladungskanäle mit beschleunigten Elektronen und Ionen. Insbesondere die leichten Elektronen treffen mit hoher Geschwindigkeit auf die Oberfläche mit Energien, die ausreichen, um die meisten Molekülbindungen aufzubrechen. Die Reaktivität der außerdem entstehenden reaktiven Gasbestandteile ist meist ein untergeordneter Effekt. Die aufgebrochenen Bindungsstellen reagieren dann mit Bestandteilen der Luft oder des Prozessgases weiter. Ein entscheidender Effekt ist die Bildung kurzkettiger Abbauprodukte durch Elektronenbeschuss. Bei Behandlungen höherer Intensität tritt auch ein signifikanter Materialabtrag ein.

Durch die Reaktion eines Plasmas mit der Substratoberfläche werden verstärkt die Plasmabestandteile direkt "eingebaut". Alternativ kann auf der Oberfläche ein angeregter Zustand oder eine offene Bindungsstelle erzeugt werden, die dann sekundär weiterreagieren, zum Beispiel mit Luftsauerstoff. Bei manchen Gasen wie Edelgasen ist keine chemische Bindung der Prozessgasatome oder -moleküle an das Substrat zu erwarten. Hier findet die Aktivierung des Substrats ausschließlich über Sekundärreaktionen statt.

Der wesentliche Unterschied ist also, dass bei der Plasmabehandlung keine direkte Einwirkung diskreter Entladungskanäle auf die Oberfläche stattfindet. Die Wirkung findet also homogen und schonend vor allem über reaktive Gasbestandteile statt. Bei einer indirekten Plasmabehandlung sind freie Elektronen möglicherweise vorhanden, aber nicht beschleunigt da die Behandlung außerhalb des erzeugenden elektrischen Feldes stattfindet.

Die Plasmabehandlung ist also weniger zerstörend als eine Coronabehandlung, da keine diskreten Entladungskanäle auf die Oberflächen treffen. Es entstehen weniger kurzkettige Abbauprodukte, die eine Schicht mit negativem Einfluss auf der Oberfläche bilden können. Deswegen können oft bessere Benetzbarkeiten nach Plasmabehandlung gegenüber Corona erzielt werden bei längerer Beständigkeit des Effekts.

Der geringere Kettenabbau und die homogene Behandlung durch Verwendung einer Plasmabehandlung tragen wesentlich zur Robustheit und Effektivität des gelehrten Verfahrens bei.

Die erfindungsgemäße Klebemasse ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Haftklebemassenschicht besteht aus einer durch expandierbare Mikroballons geschäumten Haftklebemassenschicht aus reinem Acrylat oder mehrheitlich aus Acrylat (Hotmelt oder UV), insbesondere viskoelastische, sowie Blends und Copolymere.

Die Haftklebemasse kann zur Verbesserung der Klebeeigenschaften mit Klebrigmachern abgemischt sein. Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von Rohstoffen wie zum Beispiel $\alpha$- oder ß-Pinen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Typische Einsatzmengen sind 10 bis 100 Gewichtsteile bezogen auf Polymere der Klebemasse.

Zur weiteren Verbesserung der Kabelverträglichkeit kann die Klebmasseformulierung optional mit Lichtschutz- oder primären und/oder sekundären Alterungsschutzmitteln abgemischt sein.

Als Alterungsschutzmittel können Produkte auf Basis sterisch gehinderter Phenole, Phosphite, Thiosynergisten, sterisch gehinderter Amine oder UV-Absorber eingesetzt werden.

Bevorzugt eingesetzt werden primäre Antioxidantien wie zum Beispiel Irganox 1010 (Tetrakis-(methylene-(3,5=di-(tert)-butyl-4-hydrocinnamate))methan; CAS No. 6683-19-8 (sterisch gehindertes Phenol), BASF) oder Irganox 254, allein oder in Kombination mit sekundären Antioxidantien wie zum Beispiel Irgafos TNPP oder Irgafos 168. Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelaton auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten. Die Menge des zugesetzten Alterungsschutzmittels beziehungsweise Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf den Gesamtfeststoffgehalt liegen.

Zur Verbesserung der Verarbeitungseigenschaften kann die Klebmasseformulierung weiterhin mit üblichen Prozesshilfsmitteln wie Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Feststoffe.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, nicht expandierbare, organische Mikrokugeln aus insbesondere Phenolharzen, Kreide, Kalziumcarbonate, Zinkoxide, Titandioxide, Aluminiumoxide oder Aluminiumoxidhydroxide, Ruße, Fasern, Carbonnanotubes (CNTs) können sowohl der Justierung der Verarbeitbarkeit als auch der klebtechnischen Eigenschaften dienen. Geeignete Konzentrationen liegen im Bereich von 0,1 bis zu 70 Gewichtsteilen bezogen auf die Feststoffe, insbesondere bis zu 40 Gewichtsteilen, besonders vorzugsweise zwischen 1 und 20 Gewichtsteilen.

Als Fasern können (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie-)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle eingesetzt werden. Des Weiteren sind Garne, gefertigt aus den angegebenen Fasern, ebenfalls geeignet. Stapelfasern sind Einzelfasern, die in ihrer Länge begrenzt sind. Das Gegenteil von Stapelfasern sind Filamente (Endlosfasern).

Bevorzugt werden stabile druckfeste Mikrohohlkugeln, deren Hülle nicht auf Polymeren basieren.

Insbesondere ist auch die Kombination einer Füllung und einer Harzzugabe besonders bevorzugt. Wie aus den in den Beispielen Datensätzen ersichtlich, kann die Zugabe von Harz und einem Füllstoff eine hohe Maximalkraft in Schälprüfungen ermöglichen, bei gleichzeitiger hoher Scherbelastbarkeit im Sinne von langer Scherstandzeit und geringer Scherung unter der statischen Last Weiterhin können schwerentflammbare Füllstoffe, wie beispielsweise Ammoniumpolyphosphat, weiterhin elektrisch leitfähige Füllstoffe, wie beispielsweise Leitruß, Kohlenstofffasern und/oder silberbeschichtete Kugeln, weiterhin ferromagnetische Additive, wie beispielsweise Eisen-(III)-oxide, Alterungsschutzmitteln, Lichtschutzmitteln, Ozonschutzmitteln vor oder nach der Aufkonzentration des Polyacrylat zugegeben oder eincompoundiert werden.

Expandierbare Mikroballons erlauben eine Schäumung der Klebemasse.

Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung erweicht einerseits die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 μm Durchmesser im unexpandierten Zustand) und ihre zur Expansion benötigten Starttemperatur (75 bis 220 °C) differenzieren. Wenn der Mikroballontyp beziehungsweise die Schäumungstemperatur auf das zur Massecompoundierung benötigte Temperaturprofil und die Maschinenparameter abgestimmt ist, können Massecompoundierung und Schäumung auch gleichzeitig in einem Schritt erfolgen.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Schäumung von Klebemassen entsprechend des erfindungsgemäßen Verfahrens geeignet.

Insbesondere für "Foam-In-Place"-Anwendungen kann es vorteilhaft sein, expandierbare Mikroballons, also vorexpandierte (vom Hersteller expandierte, also später gegebenenfalls noch weiter expandierbare, beispielsweise die DE-Typen von Expancell), anexpandierte (also im Herstellungsprozess des Klebebands teilexpandierte) und unexpandierte, einzusetzen. Bei "Foam-In-Place"-Anwendungen wird die Schäumung des Klebebands nach Verklebung initiiert oder fortgesetzt.

Varianten zur Schäumung der Klebemasse können auch die chemische Schäumung mit Gasabspaltern oder die literaturbekannte physikalische Schäumung durch mechanische Einarbeitung von Gasen wie Luft oder Stickstoff sein.

Falls die zur Schaumbildung eingebrachten Hohlkörper (insbesondere Mikroballons) nachträglich zerstört werden, kann trotzdem ein nicht-syntaktischer Schaum hoher Qualität erhalten werden.

Zu den bevorzugten Klebemassen muss bemerkt werden, dass die Verbesserung der Adhäsion durch die Erfindung nicht unbedingt durch jede beliebig gewählte Prüfung nachgewiesen werden kann. Wenn beispielsweise das Bruchbild in einer Klebkraftprüfung ohne die gelehrte Behandlung 100%iger Kohäsionsbruch war, kann die gesteigerte Adhäsion keinen messbaren Gewinn bringen, da die Volumeneigenschaften des Klebebandes die schwächste Verbindung darstellt. Dies kann die gesteigerte Adhäsion verbergen.

In besonderen Fällen kann ein komplexer Mischbruch mit Anteilen aus Adhäsions- und Kohäsionsversagen eine hohe Kraft im Schälversuch erzeugen. Wenn durch die gelehrte Behandlung die Adhäsion verbessert wird, kann die gemessene Kraft im Schälversuch sinken, da die Bruchart sich beispielsweise in reinen Kohäsionsbruch ändert. In solchen Fällen könnte die verbesserte Adhäsion beispielsweise durch die Zunahme an Masserückständen auf dem Substrat nachgewiesen werden.

Grundsätzlich ist für die Steigerbarkeit der praktischen Leistungsfähigkeit des Klebebandes durch die gesteigerte Adhäsion das Zusammenspiel aus Haftklebemasse und Träger entscheidend.

Die unten genannten bevorzugten Eigenschaften führen zu einer besonders starken Verbesserung der Adhäsion (überprüft zum Beispiel durch eine Klebkraftmessung) durch das gelehrte Verfahren, da die Volumeneigenschaften des Klebebands dies dann zulassen. Diese besondere Steigerung ist aber überraschend, da die guten Volumeneigenschaften bei schwacher Adhäsion nicht so klar erkennbar sind.

Eine geeignete Füllung, zum Beispiel mit Glashohlkugeln, kann die Druck- und Scherbelastbarkeit einer Haftklebemasse deutlich erhöhen. Diese positive Volumeneigenschaft kann aber erst bei hinreichend hoher Adhäsion zum Tragen kommen. Sehr viele unterschiedliche Konzepte zur Füllung von Haftklebemassen sind bekannt und beschrieben.

Die meisten verbessern Aspekte der Kohäsion, aber nicht der Adhäsion. Die maximale Leistungsfähigkeit der Produkte ist oft nicht ausgeschöpft (oder überhaupt bekannt) aufgrund der mangelnden Adhäsion. Die Erfindung ist also besonders geeignet für solche gefüllten Haftklebemassen, insbesondere hochgefüllte Haftklebemassen, insbesondere syntaktische Schäume.

Die erfindungsgemäß behandelte Klebemasse kann auf einem Trägermaterial aufgebracht sein, insbesondere ein Folien- (aus PE, PP, PS oder Polyester wie PET), Schaum, Gewebe-, Vlies- oder Papierträger oder ein Compositeträger.

Der Träger kann ein oder mehrere Schichten aus Folien oder Schaumträgern enthalten.

Des Weiteren kann das aus Träger und Klebemasse gebildete Klebeband ein oder mehrere funktionelle Schichten wie Sperrschichten, Schichten aus heißschmelzfähigem Material, oder anderen funktionellen Schichten enthalten. Vorzugsweise hat der Träger viskoelastische Eigenschaften.

Weiterhin kann auf der dem Untergrund abgewandten Seite des Trägers eine zweite Klebemasse vorhanden sein, die nicht mit der ersten identisch sein muss und die nicht mit dem erfindungsgemäßen Verfahren behandelt sein muss, aber behandelt sein kann. Die freiliegende Seite der zweiten Klebemasseschicht kann mit Atmosphärendruckplasma behandelt sein. Ebenso gilt dies für den "zweiten" Untergrund, auf dem die zweite Klebemasse verklebt wird. Bevorzugt sind beidseitig klebende Selbstklebebänder, bevorzugt auf einem Folien- oder Schaumträger.

Vorteilhafte Ausführungsformen der Erfindung umfassen die Klebebänder K1 und K3, wie sie in den Beispielen beschrieben sind.

Bevorzugt sind weiterhin beidseitig klebende trägerlose Transferklebebänder. Besonders bevorzugt beträgt die Dicke der Haftklebemassenschicht oder des damit gebildeten Klebebands $\geq 20~\mu m$, bevorzugt $\geq 100~\mu m$, ganz besonders bevorzugt $\geq 300~\mu m$ und/oder maximal $\leq 1500~\mu m$, bevorzugt $\leq 1000~\mu m$.

Insbesondere ein einschichtiger Aufbau aus einer viskoelastischen Schicht ist bevorzugt. Hier können keine Schwächen an den inneren Grenzflächen auftreten, und es ist ein einfaches kostengünstiges Produkt. Hier werden typischerweise die größten Kompromisse im Produktdesign eingegangen zwischen Adhäsion und Kohäsion, da keine speziellen Außenschichten zum Sicherstellen der Adhäsion eingesetzt werden. Diese Produkte profitieren also besonders von einer nachträglich gesteigerten Adhäsion. Insbesondere ist ein einschichtiger Aufbau eines gefüllten und mit Harz abgemischten viskoelastischen Haftklebebandes bevorzugt, wobei insbesondere ein syntaktischer Schaum bevorzugt ist. Ein mehrschichtiger Aufbau viskoelastischer Schichten ist ebenfalls bevorzugt.

Grundsätzlich sind als Untergrund alle Substrate geeignet, sofern diese überhaupt mit dem gewählten Plasma behandelbar sind. Bei den meisten atmosphärischen Plasmabehandlungen sind die wesentlichen Ausnahmen fluorpolymerbasierte Kunststoffe, dabei vor allem die vollfluorinierten. Mit geeigneten intensiven Plasmen sind aber selbst diese Materialien behandelbar.

Insbesondere sind sowohl hoch- als auch niederenergetische Materialien vom Erfindungsgedanken eingeschlossen, beziehungsweise polare und unpolare.

Besonders bevorzugt sind die genannten Substrate in den Beispielen.

Besonders bevorzugt sind Stahl, Alu, Polyester wie PET, PVC, PC, PMMA, PE, PP, EPDM, Glas, ABS, Lacke und Lackierungen (unter anderem acrylat- oder PU-basiert), KTL, Compositmaterialien wie CFK, Woodcompositeproducts, beschichtete Kartonagen, Folien, Flaschen, Plastikbehälter, ohne dass diese Aufzählung als abschließend zu verstehen ist.

Eine Behandlung mit Atmosphärendruckplasma unterscheidet sich also - wie bereits erwähnt - wesentlich von einer Coronabehandlung. Die indirekte Behandlung mit Atmosphärendruckplasma mittels Düsen ist dabei besonders für das gelehrte Verfahren geeignet.

Eine Plasmadüse mit einem stabilen Plasmastrahl kann noch aus einigen cm Abstand eine homogene Wirkung erzielen. Hingegen hat ein typischer klassischer Coronaspalt hat eine maximale Öffnung von 2 bis 3 mm, bei größeren Abständen ist entweder keine Entladung mehr möglich oder die Entladungen werden sehr inhomogen. Dicke unregelmäßig geformte Substrate oder Bauteile können also nur mit einer Plasmadüse gut behandelt werden.

Eine Plasmadüse ist besonders geeignet für schmale Behandlungen in der Breite eines Klebebands.

Plasmadüsen gibt es in verschiedenen Geometrien: rund, linear, etc. Die Bauform einer Rund-Düse ist im Allgemeinen geeignet für Behandlung von schmalen Klebebändern. Linear-Düsen sind aber auch geeignet.

Das Plasma ist potentialarm und kann durch geeignete Maßnahme praktisch potentialfrei ausgeführt werden. Damit können auch empfindliche elektronische Bauteile nach dem gelehrten Verfahren behandelt werden.

Eine Plasmabehandlung in Luft kann ozonfrei sein (TÜV Nord, Berichts Nr. 34 268 8, für einen Plasmaerzeuger der Firma Plasmatreat GmbH). Wenn kein Ozonvernichter gebraucht wird, ist dies ein weiterer Preisvorteil.

Eine indirekte Plasmabehandlung mittels Düsen erzeugt durch das Wegfallen einer rückwärtigen Gegenelektrode keine Rückseitenschädigung des Substrats oder Klebebands. Typischerweise besitzen Selbstklebebänder einen Trennliner oder Trennbeschichtung (zum Beispiel silikonisiert), welcher durch unbeabsichtigte Coronaentladungen auf der Rückseite geschädigt würde. Eine potenzialfreie Plasmadüsenbehandlung ist ganz besonders geeignet um Rückseitenentladungen zu verhindern.

Das erfindungsgemäße Verfahren bietet eine Vielzahl von Vorteilen.

Das Verfahren kann über einen weiten Bereich von Haftklebemassen und Untergründen eine Steigerung sowohl von Klebkraft als auch von Scherfestigkeit erzielen. Die Oberflächenenergie des Substrats vor der Behandlung spielt keine Rolle.

Das Verfahren ist robust und nicht abhängig von einer optimierten Behandlung für jede Masse und/oder von einer optimierten Behandlung für jedes Substrat.

In vielen Fällen kann das Verfahren mit einem gegebenen Klebeband über mehrere Substratklassen eine vergleichbare Endklebkraft erzeugen, häufig durch Kohäsionsbruch. Dies bietet als "Universaltape" besondere Vorzüge, zum Beispiel bei Auslegung von Verklebungen bei unterschiedlichen Verklebungspartnern.

Der Effekt durch das gelehrte Verfahren ist synergistisch, also mehr als die Summe der Einzeleffekte der Behandlung von Substrat oder Klebemasse.

Insbesondere der oft ausbleibende Erfolg der Behandlung einer Seite allein macht die Behandlung beider Seiten nicht naheliegend.

Es können durch die Erfindung in einem Klebeband (geeignete Volumeneigenschaften vorausgesetzt) folgende wünschenswerte Eigenschaften vereint werden:

- ◦ High Peel Strength
- ◦ High Initial Adhesion
- ◦ High Shear Resistance
- ◦ High Temperature Resistance
- ◦ Eignung für Substrate mit Low Surface Energy (LSE)

Das Verfahren ist so robust und einfach, dass mit einem einzigen Parametersatz (zum Beispiel gemäß Verfahren PV1, wie es in den Beispielen erläutert ist) für die meisten untersuchten Klebebänder und Substrate eine Maximierung der Adhäsion erzielt werden kann. "Maximierung" ist hier definiert als eine Steigerung bis an die Messgrenze. Entweder stößt das Material an seine Kohäsionsgrenze, oder die Messzeit bei Scherstandprüfungen ist zu lang. Eine weitere Steigerung der Adhäsion kann keinen Zugewinn an Verklebungsfestigkeit mehr bringen. Eine messbare Differenzierung bei Verwendung anderer analytischer Methoden ist jedoch nicht ausgeschlossen.

Das gelehrte Verfahren kann also als "Universalbehandlung" durchgeführt werden. Dies ist ein besonderes Merkmal der Erfindung.

Ein so behandeltes und verklebtes Klebeband zeigte auf allen Untergründen die gleiche oder zumindest vergleichbare Performance. Durch das gelehrte Verfahren wurden die Verklebungen unabhängig vom Untergrund. Die beschriebenen Klebebänder erhielten in diesem Sinne somit die Eigenschaft von "Universalklebebändern". Dies ist ebenfalls ein besonderes Merkmal der Erfindung. Dies ist insbesondere bei der Verwendung von Acrylatklebmassen überraschend.

Insbesondere weil die Erfindung die gleichwertige Verklebung auf unterschiedlichen Substraten ermöglicht, ist es besonders wünschenswert, für eine hinreichende Verklebung nicht zwingend auf jedem Substrat und jeder Klebemasse eine spezielle Vorbehandlungsmethode entwickeln zu müssen.

Das Verfahren erzeugt auch eine gute Beständigkeit gegen unpolare Lösemittel.

**Prüfmethoden**

Klebkraft Stahl 90°

Die Klebkraftprüfungen erfolgten in Anlehnung an PSTC-101 durch Abziehen der aufgeklebten Klebebänder von den Substraten bei 300 mm/min bei einem Winkel von 90° zwischen Abzugsrichtung und Substrat. Für die Messung wurden die Substrate in eine spezielle Halterung geschoben, die es ermöglicht das Muster in einem Winkel von 90° senkrecht nach oben abzuziehen. Die Klebkraftmessung erfolgte mit einer Zwick-Zugprüfmaschine. Die Messergebnisse sind gemittelt über eine Abzugsstrecke von mindestens 75 mm, sind normiert auf die Breite des Klebebands in N/cm angegeben und sind gemittelt aus drei Messungen.

Die beidseitig klebenden trägerlosen Klebebänder wurden mit einer 36 µm geätzten PET-Folie kaschiert, welche einen sehr guten Verbund zur Klebmasseoberfläche herstellt. Die anderen Klebebänder besitzen einen zugfesten Träger.

Die Prüfmuster wurden kurz nach der Verklebung mit einer 2 kg Rolle 5 mal mit einer Aufrollgeschwindigkeit von 10 m/min angepresst. Wenn nicht anders angegeben, erfolgte danach eine Lagerung von drei Tagen bei 23 °C und 50 % +/- 5 % rel. Luftfeuchte vor der Messung. Die Bestimmung der Klebkraft erfolgt bei einem Prüfklima von 23 °C +/- 1 °C Temperatur und 50 % +/- 5 % rel. Luftfeuchte. In der Klebkraftprüfung wurde entweder an der aufkaschierten PET-Folie gezogen oder am Träger des Klebebandes.

Der Begriff "Klebkraft" wird in dieser Erfindung für die hier genannten Parameter verwendet, insbesondere 90°-Abzugswinkel und 300 mm/min Abzugsgeschwindigkeit, sofern nicht anders vermerkt. Insbesondere ist dabei auch die Lagerzeit von drei Tagen bei 23°C und 50 % +/- 5 % rel. Luftfeuchte nach Verklebung und vor der Messung inbegriffen.

## Scherstandzeit

Die Scherstandzeit gibt die Verklebungsfestigkeit für eine parallel zum verklebten Band angreifende Belastungskraft an. Sie ist die Zeit, die bis zum völligen Abscheren eines belasteten Klebebandes von einer Stahlplatte gemessen wird.

Die Scherstandzeiten werden ermittelt durch Verkleben eines beidseitig klebenden Klebebandes zwischen zwei polierten Stahlplatten mit einer Verklebungsfläche von 25 mm x 20 mm. Die Stahlplatten besitzen geeignete Bohrungen zum Aufhängen des Prüfkörpers und zum Anhängen eines Gewichts. Nach Verklebung werden die Prüfkörper mit 600 N für eine Minute angepresst. Soweit nicht anders angegeben, werden die Prüfkörper nach Verklebung und vor Messung 14 Tage bei 23 °C und 50 % +/- 5 % rel. Luftfeuchte gelagert. Soweit nicht anders angegeben, werden die Prüfkörper in einer temperierten Kammer bei konstant 70 °C und bei einer statischen Belastung mit einem Gewicht von 1 kg vermessen. Als Ergebnis angegeben ist die Zeit bis zum Versagen in Minuten [min].

## Statische Glasübergangstemperatur

Die Bestimmung der statischen Glasübergangstemperatur erfolgt über Dynamische Differenzkalorimetrie nach DIN 53765. Die Angaben zur Glasübergangstemperatur $T_g$ beziehen sich auf den Glasumwandlungstemperatur-Wert $T_g$ nach DIN 53765:1994-03, sofern im Einzelfall nichts anderes angegeben ist.

## Molekulargewichte

Die Bestimmung des mittleren Molekulargewichtes $M_W$ und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 $\mu$m, $10^3$ Å ($10^{-7}$ m), ID 8,0 mm x 50 mm verwendet. Zur Auftrennung wurden die Säulen PSS-SDV, 5 $\mu$m, $10^3$ Å ($10^{-7}$ m), $10^5$ Å ($10^{-5}$ m) und $10^6$ Å ($10^{-4}$ m) mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

## Feststoffgehalt

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

## K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

## Dichtebestimmung mittels Pyknometer:

Das Messprinzip beruht auf der Verdrängung der im Pyknometer befindlichen Flüssigkeit. Dabei wird erst das leere beziehungsweise das mit Flüssigkeit gefüllte Pyknometer gewogen und dann der zu vermessende Körper in das Gefäß gegeben.

Aus den Gewichtsunterschieden berechnet sich die Dichte des Körpers:
Es sei

- $m_0$ die Masse des leeren Pyknometers,
- $m_1$ die Masse des mit Wasser gefüllten Pyknometers,
- $m_2$ die Masse des Pyknometers mit dem Festkörper,
- $m_3$ die Masse des Pyknometers mit dem Festkörper, aufgefüllt mit Wasser,
- $\rho_W$ die Dichte des Wassers bei der entsprechenden Temperatur,
- $\rho_F$ die Dichte des Festkörpers.

Dann ergibt sich die Dichte des Festkörpers zu:

$$\rho_F = \frac{(m_2 - m_0)}{(m_1 - m_0) - (m_3 - m_2)} \cdot \rho_W$$

Es wird pro Muster jeweils eine Dreifachbestimmung durchgeführt. Es ist zu beachten, dass bei diesem Verfahren die Rohdichte (bei porösen Festkörpern, vorliegend einem Schaum, die Dichte basierend auf dem Volumen einschließlich der Porenräume) erhalten wird.

Im Folgenden soll die Erfindung anhand mehrerer Beispiele näher erläutert werden, ohne damit eine wie auch immer geartete Einschränkung hervorrufen zu wollen.

**Plasmaverfahren PV1**

Im Plasmaverfahren PV1 wurde der Plasmaerzeuger RD1004 mit Plasma-Generator FG5001 der Firma Plasmatreat GmbH (Steinhagen, Deutschland) verwendet. Der erzeugte Plasmastrahl wurde über eine mit 2800/min rotierende Düsenspitze unter leicht schrägem Winkel herausgeführt, so dass die Behandlung eine Kreisbahn überstreicht. Dabei war die Düse feststehend senkrecht im 90°-Winkel zum Substrat angebracht und es wurde ein bewegter Tisch mit den aufliegenden Proben (Substraten) unter der Düse durchgefahren.

Bei der gleichförmigen Bewegung der Düse relativ zum Substrat bei konstantem Abstand zum Substrat wird die Behandlung in einer Breite durchgeführt die dem Durchmesser des Plasmakegels bei dem gegebenen Abstand entspricht. Insbesondere ist dieser Durchmesser größer als der Durchmesser des Plasmastrahls selbst. Bei dem hier gewählten Abstand zwischen Düse und Substrat entspricht dies einer Behandlungsbreite von etwa 25 mm.

Im Verfahren PV1 wurde (soweit nicht anders angegeben):

- sowohl der Untergrund als auch die Klebmasse behandelt
- direkt hintereinander die Behandlung von miteinander zu verklebendem Untergrund und Klebmasse durchgeführt
- mit einer Geschwindigkeit von 5 m/min behandelt
- mit Druckluft als Prozessgas behandelt
- mit einem Abstand von 12 mm zum fahrenden Tisch behandelt

Aus dem Abstand von 12 mm zum fahrenden Tisch ergibt sich ein unterschiedlicher Abstand zwischen Düse und behandelter Oberfläche je nach Substratdicke. Der Abstand Düse zur Substratoberfläche kann aus den angegebenen Daten der Substrate (Untergründe und Klebebänder) errechnet werden. Wenn der Abstand zwischen Düse und Substratoberfläche auf einen bestimmten Wert eingestellt wurde, ist dies explizit vermerkt.

Die Fähigkeit, mit variierenden Abständen bei gleichem Effekt zu behandeln, ist einer der Hauptmerkmale der Erfindung.

**Verwendete Klebmassen und Selbstklebebänder**

Tabelle 1: Verwendete Klebebänder

| Klebeband | Haftklebemasse | Aufbau | Dicke des Klebebands |
|---|---|---|---|
| K1 | Acrylat (Hotmelt), syntaktischer Schaum mit Mikroballons | Viskoelastisches Einschichtprodukt | 905 $\mu$m |
| K2 | Acrylat (Hotmelt), Reinacrylat | Viskoelastisches Einschichtprodukt | 900 $\mu$m |
| K3 | Acrylat (Hotmelt), syntaktischer Schaum mit Mikroballons und mit Harzzugabe | Viskoelastisches Einschichtprodukt | 1105 $\mu$m |
| K4 | Acrylat (Hotmelt), syntaktischer Schaum mit Mikro-Glashohlkugeln und mit Harzzugabe | Viskoelastisches Einschichtprodukt | 990 $\mu$m |
| K5 | Acrylat (UV-Technologie), syntaktischer Schaum mit Mikro-Glashohlkugeln | Viskoelastisches Einschichtprodukt | 800 $\mu$m |

(fortgesetzt)

| Klebeband | Haftklebemasse | Aufbau | Dicke des Klebebands |
|---|---|---|---|
| K6 | Naturkautschuk | Klebemasse auf Gewebeträger | 280 μm |
| K7 | Synthesekautschuk | Klebemasse auf Folienträger | 100 μm |
| K8 | Polyurethan, syntaktischer Schaum mit Mikroballons | Viskoelastisches Einschichtprodukt | 1000 μm |

Für Details und genaue Angaben dienen folgende Beschreibungen.

Die Beispiele K2, K4, K5, K6, K7 und K8 sind nicht erfindungsgemäß.

Tabelle 2: Verwendete Rohstoffe

| Chemische Verbindung | Handelsname | Hersteller | CAS-Nr. |
|---|---|---|---|
| Bis-(4-*tert*-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| 2,2'-Azobis(2-methylbutyronitrile) | Vazo 67 | DuPont | 13472-08-7 |
| Pentaerythrittetraglycidether | Polypox R16 | UPPC AG | 3126-63-4 |
| | Denacol EX-411 | Nagase Chemtex Corp. | |
| 3,4-Epoxycyclohexylmethyl-3,4-epoxycyclohexancarboxylat | Uvacure 1500 | Cytec Industries Inc. | 2386-87-0 |
| *N'*-(3-(Dimethylamino)propyl)-*N,N*-dimethyl-1,3-propandiamin | Jeffcat® Z-130 | Huntsman | 6711-48-4 |
| Triethylentetramin | Epikure 925 | Hexion Speciality Chemicals | 112-24-3 |
| Mikroballons (MB) (trocken-unexpandierte Mikrosphären, Durchmesser 9 - 15 μm, Expansions-Starttemperatur 106 - 111 °C, TMA-Dichte $\leq$ 25 kg/m$^3$) | Expancel 051 DU 40 | ExpancelNobel Industries | |
| Mikroglashohlkugeln (GHK) (Borsilikatglas, effektive Dichte 0,7 g/cm$^3$, Größenverteilung 10 bis 100 μm mit $D_{50}$=35 μm, Druckfestigkeit 24,1 MPa) | Q-CEL 5070S | OMEGA MINERALS | |
| Terpenphenolharz (Erweichungspunkt 110 °C; $M_w$ = 500 bis 800 g/mol; D = 1,50) | Dertophene T110 | DRT resins | 25359-84-6 |
| Resorcinol bis(diphenyl Phosphat) | Reofos RDP | Chemtura | 57583-54-7 |
| Wässrige Rußdispersion (wässrige, lösemittelfreie, organische Pigmentpräparation) | Levanyl Schwarz N-LF (Levanyl Black N-LF) | Lanxess | |
| Acrylsäure-n-Butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| Methylacrylat | | BASF | 96-33-3 |
| SIS/SI Block-Copolymer | Vector 4113 | Dexco Polymers | |
| Kohlenwasserstoff-Harz | Escorez 1310LC | Exxon | |

(fortgesetzt)

| Chemische Verbindung | Handelsname | Hersteller | CAS-Nr. |
|---|---|---|---|
| Technisches mineralisches Weissöl | Tufflo 6056 | Citco | 8042-47-5 |
| Antioxidans | Irganox 1010 | BASF | |

Die Expansionsfähigkeit der Mikroballons kann durch die Bestimmung der TMA-Dichte [kg/m³] beschrieben werden (Stare Thermal Analysis System der Firma Mettler Toledo; Heizrate 20 °C/min). Die TMA-Dichte ist hierbei die minimal erreichbare Dichte bei einer bestimmten Temperatur $T_{max}$ unter Normaldruck, bevor die Mikroballons kollabieren.

**Klebmasse M1 und Klebeband K1**

Herstellung Basispolymer M1

Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo® 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo® 67, gelöst in 500 g Aceton, zugegeben und nach 2 h mit 10 kg Aceton/Isopropanol-Gemisch (96:4) verdünnt. Nach 5,5 h wurden 150 g Bis-(4-*tert*-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-*tert*-butylcyclohexyl)peroxydicarbonat, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 75,2, ein mittleres Molekulargewicht von Mw = 1 370 000 g/mol, eine Polydispersität von D (Mw/Mn) = 17,13 und eine statische Glasübergangstemperatur von Tg = - 38.0 °C.

**Verfahren 1: Aufkonzentration / Herstellung der Polyacrylathotmelts**

Die Acrylatcopolymere (Basispolymere M1 und M2) werden mittels Einschneckenextruder (Aufkonzentrationsextruder, BERSTORFF GmbH, Deutschland) weitestgehend vom Lösemittel befreit (Restlösemittelgehalt ≤ 0,3 Gew.-%; vgl. bei den einzelnen Beispielen). Exemplarisch sind hier die Parameter der Aufkonzentration des Basispolymeren M1 dargestellt. Die Drehzahl der Schnecke betrug 150 U/min, der Motorstrom 15 A, es wurde ein Durchsatz von 60,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

**Verfahren 2: Herstellung geschäumte Masse**

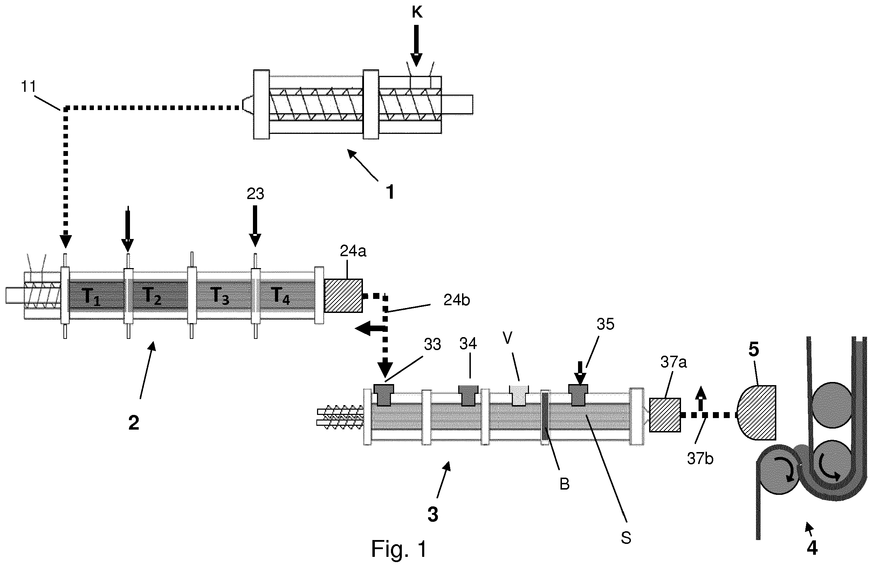

Die Schäumung findet in einer Versuchsanlage statt, die der Darstellung in Figur 1 entspricht.

Das entsprechende Basispolymer K (M1 bis M5) wird in einem Fütterextruder 1 (Einschneckenförderextruder der Firma TROESTER GmbH & Co KG, Deutschland) aufgeschmolzen und mit diesem als Polymerschmelze über einen beheizbaren Schlauch 11 in einen Planetwalzenextruder 2 (PWE) der Firma ENTEX (Bochum) gefördert (es wurde insbesondere ein PWE mit vier unabhängig voneinander heizbaren Modulen $T_1$, $T_2$, $T_3$, $T_4$ eingesetzt). Über die Dosieröffnung 22 wird nun das geschmolzene Harz zugegeben. Weiterhin besteht die Möglichkeit, zusätzliche Additive oder Füllstoffe, wie zum Beispiel Farbpasten, über weitere vorhandene Dosierstellen zuzuführen. An Punkt 23 wird der Vernetzer hinzugefügt. Alle Komponenten werden zu einer homogenen Polymerschmelze gemischt.

Mittels einer Schmelzepumpe 24a und eines beheizbaren Schlauches 24b wird die Polymerschmelze in einen Doppelschneckenextruder 3 (Firma BERSTORFF) überführt (Eingabeposition 33). An Position 34 wird die Beschleunigerkomponente hinzugefügt. Anschließend wird die gesamte Mischung in einem Vakuumdom V bei einem Druck von 175 mbar von allen Gaseinschlüssen befreit (Kriterium für Gasfreiheit siehe oben). Im Anschluss an die Vakuumzone befindet sich auf der Schnecke ein Blister B, welcher einen Druckaufbau in dem darauf folgenden Segment S ermöglicht. Durch geeignete Steuerung der Extruderdrehzahl und der Schmelzepumpe 37a wird in dem Segment S zwischen Blister B und Schmelzepumpe 37a ein Druck von größer 8 bar aufgebaut, an der Dosierstelle 35 die Mikroballonmischung (Mikroballons eingebettet in das Dispergierhilfsmittel gemäß der Angaben bei den Versuchsreihen) hinzugefügt und mittels eines Mischelements homogen in die Vormischung eingearbeitet. Die entstandene Schmelzmischung wird in eine Düse 5 überführt.

Nach Verlassen der Düse 5, also nach Druckabfall, expandieren die eingearbeiteten Mikroballons, wobei durch den Druckabfall eine scherungsarme, insbesondere scherungsfreie, Abkühlung der Polymermasse erfolgt. Es entsteht eine geschäumte Selbstklebemasse S, welche anschließend zwischen zwei Trennmaterialien, insbesondere zwischen einem Trennmaterial, welches erneut nach dem Entfernen wiederverwendet werden kann (Prozessliner) beschichtet und mittels eines Walzenkalanders 4 bahnförmig ausgeformt wird.

Ein alternatives Verfahren lässt sich der DE 10 2009 015 233 A1 entnehmen.

**Herstellung K1**

Tabelle 3: Komponenten für K1

| Komponenten | Basispolymer M1 | [w.-%] | 94,85 |
| | Expancel 051 DU 40 | | 1,93 |
| | Levanyl N-LF | | 2,15 |
| | Polypox R16 | | 0,22 |
| | Jeffcat Z-130 | | 0,19 |
| | Reofos RDP | | 0,66 |
| Aufbau | Dicke | [μm] | 905 |
| | Dichte | [kg/m$^3$] | 650 |

Die genannten Komponenten wurden nach Verfahren 2 abgemischt und extrudiert, um das geschäumte Klebeband K1 herzustellen.

**Klebmasse M2 und Klebeband K2**

Herstellung Basispolymer M2:

Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g Vazo® 67), gelöst in 400 g Aceton, hinzugegeben. Anschließend wurde das äußere Heizbad auf 75 °C erwärmt und die Reaktion konstant bei dieser Außentemperatur durchgeführt. Nach 1 h wurden erneut 40 g Vazo® 67, gelöst in 400 g Aceton, zugegeben und nach 4 h wurde mit 10 kg Aceton/Isopropanol-Gemisch (94:6) verdünnt.

Nach 5 h sowie nach 7 h wurde jeweils mit 120 g Bis-(4-*tert*-butylcyclohexyl)-peroxydicarbonat, jeweils gelöst in 400 g Aceton, nachinitiiert. Nach 22 h Reaktionszeit wurde die Polymerisation abgebrochen und auf Raumtemperatur abgekühlt. Das Produkt hatte einen Feststoffgehalt von 55,9 % und wurde getrocknet. Das resultierende Polyacrylat hatte einen K-Wert von 58,8, ein mittleres Molekulargewicht von Mw = 746.000 g/mol, eine Polydispersität von D (Mw/Mn) = 8,9 und eine statische Glasübergangstemperatur von Tg = - 35,6 °C.

Aufkonzentration/Herstellung des Polyacrylathotmelts nach Verfahren 1 (siehe oben)

**Herstellung K2**

Tabelle 4: Komponenten für K2

| Komponenten | Basispolymer M2 | [w.-%] | 99,45 |
| | Polypox R16 | | 0,4 |
| | Jeffcat Z-130 | | 0,15 |
| Aufbau | Dicke | [μm] | 900 |
| | Dichte | [kg/m$^3$] | 1015 |

Die genannten Komponenten wurden nach Verfahren 2 abgemischt und extrudiert, um das Klebeband K2 herzustellen.

**Klebeband K3**

**Herstellung K3**

Tabelle 5: Komponenten für K3

| | | | | |
|---|---|---|---|---|
| Komponenten | Basispolymer M2 | | [w.-%] | 69,6 |
| | Dertophene T110 | | | 28,3 |
| | Expancel 051 DU 40 | | | 0,7 |
| | Levanyl N-LF | | | 0,5 |
| | Polypox R16 | | | 0,14 |
| | Epikure 925 | | | 0,14 |
| Aufbau | Dicke | | [$\mu$m] | 1105 |
| | Dichte | | [kg/m$^3$] | 780 |

Die genannten Komponenten wurden nach Verfahren 2 abgemischt und extrudiert, um das geschäumte Klebeband K3 herzustellen.

**Klebeband K4**

**Herstellung K4**

Tabelle 6: Komponenten für K4

| | | | | |
|---|---|---|---|---|
| Komponenten | Basispolymer M2 | | [w.-%] | 48,7 |
| | Dertophene T110 | | | 19,8 |
| | Q-Cel 5070S | | | 31,0 |
| | Polypox R16 | | | 0,21 |
| | Jeffcat Z-130 | | | 0,28 |
| Aufbau | Dicke | | [$\mu$m] | 990 |
| | Dichte | | [kg/m$^3$] | 1010 |

Die genannten Komponenten wurden nach Verfahren 2 abgemischt und extrudiert, um das gefüllte Klebeband K4 herzustellen.

**Klebeband K5**

Das Klebeband K5 ist ein gefüllter einschichtiger Acrylatschaum ohne Harzzugabe der Firma 3M mit der Bezeichnung GT6008 mit einer Dichte von 700 kg/m$^3$ und einer Dicke von 800 $\mu$m. Es ist gefüllt mit Mikro-Glashohlkugeln (GHK) um einen syntaktischen Schaum zu ergeben. Das Klebeband wird mit UV-Polymerisation hergestellt, wobei das Verfahren in Anlehnung beispielsweise an DE 40 02 834 A1 stattfindet.

**Klebmasse M6 und Klebeband K6**

Die Klebemasse M6 ist eine Naturkautschukmasse:

| | Zusammensetzung |
|---|---|
| | Festeinwaage [Gew.-%] |
| Rohstoff | |
| Kautschuk Natur V145 | 41,90 |
| RES HIKO | 41,40 |
| Fill Kreide MS 40 | 12,70 |
| NR-Powder Premix 3 | 4,00 |

Der Powder Premix 3 besteht zu 50 Gew.-% aus Kreide, zu 25 Gew.-% aus $TiO_2$ und zu 25 Gew.-% aus Alterungsschutzmitteln.

Bei RES HIKO handelt es sich um ein $C_5$-basiertes Kohlenwasserstoffharz.

Diese Naturkautschukmasse wird mit 50 g/m$^2$ auf einen Gewebeträger aufgebracht, der mit einem Rückseitenrelease ausgerüstet ist.

**Klebmasse M7 und Klebeband K7**

**Anteile der Klebmasse M7**

Tabelle 7: Komponenten für M7

| Menge | Komponente |
|---|---|
| 100 g | Vector 4113 |
| 125 g | Escorez 1310LC |
| 10 g | Tufflo 6056 |
| 1,5 g | Irganox 1010 |

Die Klebmasse M7 nach dieser Rezeptur wurde in einer Schichtdicke von 50 g/m$^2$ auf einer MOPP-Folie (Dicke 85 $\mu$m) aufgebracht (Klebeband K7).

**Klebmasse M8 und Klebeband K8**

Das polyurethan-basierte Polymer M8 und das Klebeband K8 wurden nach der WO 2009/138402 A1 hergestellt, und zwar nach dem dortigen Beispiel 4. Des Weiteren sei im Zusammenhang mit der Herstellung noch auf die EP 2 325 220 A1 verwiesen. Es ist ein mit vorexpandierten Mikroballons gefüllter viskoelastischer syntaktischer Schaum. Das Produkt wurde in einer Dicke von 1000 $\mu$m hergestellt.

Verwendete Substrate

Für Klebkraftprüfung:

Tabelle 8: In Klebkraftprüfungen verwendete Substrate

| Substrat | Beschreibung | Dicke |
|---|---|---|
| EPDM | Lyondell Basell (HX TRC 135X/4 Black), glatt | 3,5 mm |
| PE, PP, ABS, PET | Standard Kunststoffplatten aus Polyethylen, Polypropylen, Acrylnitril-Butadien-Styrol, Polyethylenterephthalat | 3 mm |
| ASTM-Stahl | Standardprüfplatten Stahl nach ASTM-Norm | 1 mm |
| Lack 1 | BASF FF79-0020 (Basis: Polyurethan) Auf Blech mit Basislack ausgestrichen | 1 mm |
| Lack 2 | BASF FF99-0778, (Basis: Acrylatharz) auf dünnem Blech ausgestrichen, auf Kunststoffplatte montiert | 3,5 mm |

(fortgesetzt)

| Substrat | Beschreibung | Dicke |
|---|---|---|
| CFK | Carbonfaserkomposit | 2,3 mm |
| KTL | Kathodische Tauchlackierung auf Blech | 0,8 mm |

**Daten, Beispiele**

**Nachweis der Vorteilhaftigkeit des Verfahrens bei acrylatbasierten Klebemassen**

(Plasmabehandlung nach Verfahren PV1 oder analog zu PV1 auf den angegebenen Oberflächen, Verklebung sofort nach Behandlung)

Tabelle 9
Klebkraft [N/cm]

| Klebeband | Behandlung | EPDM | PE | ABS | ASTM-Stahl | Lack 1 | Lack 2 |
|---|---|---|---|---|---|---|---|
| K1 | PV1 | 42,16 | 42,98 | 42,55 | 44,41 | 39,99 | 40,54 |
| | Nichts behandelt | 1,93 | 0,62 | 13,70 | 5,38 | 3,21 | 4,87 |
| | Nur Substrat behandelt | 5,78 | 5,78 | 3,90 | 5,30 | 4,44 | 4,25 |
| | Nur Klebmasse behandelt | 1,10 | 0,71 | 11,47 | 43,22 | 2,85 | 4,00 |
| K2 | PV1 | 35,69 | 17,05 | 33,97 | 33,26 | 26,71 | 30,82 |
| | Nichts behandelt | 1,95 | 1,78 | 11,90 | 12,39 | 6,34 | 10,70 |
| | Nur Substrat behandelt | 18,61 | 14,16 | 13,66 | 13,19 | 12,61 | 12,19 |
| | Nur Klebmasse behandelt | 0,96 | 1,93 | 8,75 | 19,54 | 6,35 | 8,11 |
| K3 | PV1 | 87,53 | 76,85 | 84,87 | 84,65 | 81,76 | 83,81 |
| | Nichts behandelt | 3,11 | 2,38 | 38,11 | 49,67 | 11,91 | 30,21 |
| | Nur Substrat behandelt | 61,65 | 64,85 | 43,25 | 73,14 | 37,47 | 39,20 |
| | Nur Klebmasse behandelt | 3,63 | 2,80 | 65,86 | 83,01 | 5,57 | 26,45 |
| K4 | PV1 | 68,61 | 62,80 | 71,62 | 71,53 | 74,18 | 73,36 |
| | Nichts behandelt Nur Substrat | 1,62 | 2,07 | 12,52 | 25,74 | 8,66 | 17,27 |
| | behandelt Nur Klebmasse | 30,42 | 28,05 | 30,63 | 32,55 | 33,2 | 33,17 |
| | behandelt | 3,36 | 2,02 | 10,27 | 69,17 | 9,63 | 17,57 |
| K5 | PV1 | 39,25 | 30,17 | 37,80 | 39,38 | 38,20 | 38,10 |
| | Nichts behandelt | 0,69 | 0,63 | 9,95 | 28,25 | 2,15 | 17,17 |
| | Nur Substrat behandelt | 24,04 | 22,69 | 25,70 | 30,90 | 24,69 | 27,37 |
| | Nur Klebmasse behandelt | 0,60 | 0,56 | 1,51 | 38,74 | 2,15 | 2,76 |

Hier wird für verschiedene erfindungemäße und nicht erfindungsgemäße Acrylatmassen nachgewiesen, dass eine weitgehende Unabhängigkeit der durch das Verfahren gesteigerten Klebkraft vom Substrat erzeugt werden kann, insbesondere auch auf Substraten mit niedriger Oberflächenenergie.

In Einzelfällen kann die Klebkraft auf einem Substrat mit hoher Oberflächenenergie wie Stahl auch ohne das Verfahren schon nahe am Maximum für die gegebene Klebmasse liegen. Dies steht der Erfindung nicht entgegen.

Es kann in Einzelfällen nicht ausgeschlossen werden, dass die Verklebung auf einem Substrat nicht bei jeder Behandlungseinstellung nach einer Lagerung von drei Tagen bei 23 °C das Maximum an möglicher Klebkraft erreicht. Dies kann kompensiert werden durch eine Anpassung der Behandlungsparameter oder längere Aufziehzeit.

Besonders wichtig ist die Erkenntnis, dass in fast allen hier gezeigten Fällen die Summe der Klebkraftsteigerungen durch Einzelbehandlung von Substrat ODER Klebemasse nicht den Wert erreicht, welcher durch Behandlung von Substrat UND Klebemasse erreicht wird. (Die "Klebkraftsteigerung" wird hierbei definiert als die Differenz des Werts "nach Behandlung" und "vor Behandlung".) Der Effekt durch das gelehrte Verfahren ist in den meisten Fällen synergistisch, also mehr als die Summe der Einzeleffekte.

Insbesondere der oft nicht zufrieden stellende Effekt der Behandlung einer Seite allein macht die Behandlung beider Seiten nicht naheliegend. Als Beispiel sei die Verklebung von K1 auf PE genommen:

- Ohne Behandlung lag die Klebkraft bei 0,62 N/cm.
- Nach Behandlung nur des Untergrunds lag die Klebkraft bei 5,78 N/cm, es wurde also eine enttäuschende Steigerung um 5,16 N/cm erzielt.
- Nach Behandlung nur der Klebmasse lag die Klebkraft bei 0,71 N/cm, es wurde also eine vernachlässigbare Steigerung um 0,09 N/cm erzielt.
- Die Summe dieser Steigerungen beträgt also niedrige 5,25 N/cm.
- Dem gegenüber steht die Steigerung durch das gelehrte Verfahren um bemerkenswerte 42,36 N/cm.

**Relative Steigerung und Maximale Klebkraft**

(durch Verfahren PV1)

Tabelle 10

**Mittelwerte auf 6 Substraten (EPDM, PE, ABS, ASTM-Stahl, Lack 1, Lack 2)**

| Klebeband | Besonderes Merkmal der Klebemasse | Durchschnittliche Verbesserung der Klebkraft | Durchschnittliche maximale Klebkraft [N/cm] |
|---|---|---|---|
| K1 | Schaum | 2055% | 42,11 |
| K2 | Reinacrylat | 675% | 29,58 |
| K3 | Schaum mit Harz | 1233% | 82,97 |
| K4 | Schaum mit Harz | 1567% | 70,35 |
| K5 | Schaum | 2166% | 37,15 |

Hier wird gezeigt, dass eine Füllung oder eine Schäumung zu besonders hohen relativen Zunahmen an Klebkraft führt. Insbesondere die Kombination mit Harzzugabe führt sowohl zu einer hohen relativen Zunahme wie auch einer hohen absoluten Klebkraft.

**Nachweis auf weiteren Substraten**

**Mit Klebeband K1**

(Plasmabehandlung nach Verfahren PV1, Verklebung sofort nach Behandlung)

Tabelle 11

| Klebeband K1 | Klebkraft [N/cm] | | | |
|---|---|---|---|---|
| Behandlung: | PP | PET | CFK | KTL |
| PV1 | 45,53 | 47,10 | 38,16 | 37,58 |
| ohne Behandlung | 3,95 | 9,61 | 7,16 | 3,97 |
| nur Untergrund behandelt | 17,71 | 12,11 | 12,47 | 14,81 |
| nur Klebemasse behandelt | 2,98 | 25,85 | 37,16 | 36,98 |

Hier wird der Effekt für weitere Substrate nachgewiesen. Insbesondere wird der Effekt für ein Carbonfaserkomposit (CFK) und eine kathodische Tauchlackierung (KTL) gezeigt.

Diese Untergründe und die Untergründe aus den vorherigen Beispielen sind besonders für den Automobilbau relevant. EPDM ist ein typisches Material für Dichtungen, KTL und die Lacke 1 und 2 werden für Karosserielackierungen eingesetzt. CFK ist ein zukünftig relevantes Material für den Leichtbau.

**Nachweis der Vorteilhaftigkeit bei sonstigen Klebemassen**

(Plasmabehandlung nach Verfahren PV1, Verklebung sofort nach Behandlung)

Tabelle 12

| Klebeband | Basischemie der Haftklebemasse | Behandlung | Klebkraft [N/cm] | |
|-----------|-------------------------------|------------|------------------|-----------|
| | | | PE | ASTM-Stahl |
| K6 | Naturkautschuk | PV 1 | 9,40 | 8,80 |
| | | Nichts behandelt | 5,56 | 8,22 |
| K7 | Synthesekautschuk | PV 1 | 8,80 | 7,96 |
| | | Nichts behandelt | 4,04 | 6,72 |
| K8 | Polyurethan | PV 1 | 18,98 | 17,01 |
| | | Nichts behandelt | 3,51 | 3,61 |

Hier wird für Klebmassen auf Basis anderer Chemie der Effekt nachgewiesen. Grundsätzlich ist der positive Effekt zu sehen, aufgrund der beschränkten Maximalklebkraft der Klebmassen ist aber keine so signifikante Steigerung der Klebkraft vorhanden. Dies demonstriert die beschränkte Leistungsfähigkeit dieser Selbstklebebänder, trotz gesteigerter Adhäsion durch das Verfahren.

**Nachweis der Verbesserung der Scherfestigkeit**

(Plasmabehandlung nach Verfahren PV1, Verklebung sofort nach Behandlung)

Tabelle 13

| Klebeband | SSZ 70° 1kg [min] | | Max. Scherung [mm] | (Mittl. max. Klebkraft Tabelle [N/cm]) nach 10 |
|-----------|-------------------|------|--------------------|------------------------------------------------|
| | Ohne Plasma | PV1 | PV1 | PV1 |
| K2 | 100 | 10.000 | 1 mm | 29,58 |
| K3 | 200 | 10.000 | 10 mm | 82,97 |
| K4 | 150 | 10.000 | 1 mm | 70,35 |

Hier wird die Klebebänder auf Basis des Polymers M2 die Verbesserung der Adhäsion durch die Verlängerung der Scherstandzeit (SSZ) bei 70 °C demonstriert. Die verwendeten Klebebänder K2 bis K4 basieren auf dem Basispolymer M2 und unterscheiden sich durch Zugabe von Harz und Füllstoffen. Ohne die Plasmabehandlung sind die SSZ bei 70 °C unbefriedigend, nach Behandlung jedoch voll zufriedenstellend. Insbesondere die Kombination aus Füllung mit Mikrohohlkugeln und Harzzugabe (Klebeband K4) zeigt eine hohe Scherstandzeit bei geringer Scherung unter Last sowie hoher Klebkraft (siehe Tabelle zuvor).

**Nachweis hoher Klebkräfte nach kurzer Zeit**

(Plasmabehandlung nach Verfahren PV1, Verklebung sofort nach Behandlung)

Tabelle 14

| Klebe-band | Behandlung | Lagerzeit nach Verklebung vor der Messung wie angegeben, bei 23°C/50%rF | Klebkraft [N/cm] | | | | |
|------------|------------|--------------------------------------------------------------------------|------|------|------|------|------|
| | | | EPDM | PE | ABS | ASTM-Stahl | Lack 2 |
| K1 | ohne | 3 Tage | 1,93 | 0,62 | 13,70 | 5,38 | 4,87 |
| | PV1 | 5 min | 45,99 | 37,27 | 25,65 | 32,32 | 29,17 |
| | PV1 | 3 Tage | 42,16 | 42,98 | 42,55 | 44,41 | 40,54 |

(fortgesetzt)

**Klebkraft [N/cm]**

| Klebe-band | Behandlung | Lagerzeit nach Verklebung vor der Messung wie angegeben, bei 23°C/50%rF | EPDM | PE | ABS | ASTM-Stahl | Lack 2 |
|---|---|---|---|---|---|---|---|
| **K2** | ohne | 3 Tage | 1,95 | 1,78 | 11,90 | 12,39 | 10,70 |
| | PV1 | 5 min | 19,09 | 25,10 | 17,72 | 14,37 | 23,07 |
| | PV1 | 3 Tage | 35,69 | 17,05 | 33,97 | 33,26 | 30,82 |
| **K3)** | ohne | 3 Tage | 3,11 | 2,38 | 38,11 | 49,67 | 30,21 |
| | PV1 | 5 min | 51,63 | 47,82 | 86,45 | 90,37 | 84,82 |
| | PV1 | 3 Tage | 87,53 | 76,85 | 84,87 | 83,01 | 83,81 |
| **K5** | ohne | 3 Tage | 0,69 | 0,63 | 9,95 | 28,25 | 17,17 |
| | PV1 | 5 min | 21,09 | 34,47 | 42,90 | 43,74 | 42,59 |
| | PV1 | 3 Tage | 39,25 | 30,17 | 37,80 | 39,38 | 38,10 |

Hier wird nachgewiesen, dass dieses Verfahren keine langen Aufziehzeiten erfordert. Die Klebkräfte in den Beispielen erreichen nach 5 min durchgehend mind. 14 N/cm.

Bemerkenswerterweise erreichen die Klebkräfte in den Beispielen durch Behandlung mit PV1 bereits nach 5 min größere Werte als ohne Behandlung und drei Tagen Aufziehzeit. Besonders geeignete Klebemassen erreichen >40 N/cm nach 5 min.

Das Klebeband K3 erreichte durch unsere Erfindung nach 5 min auf Stahl eine Klebkraft von 90 N/cm, ein außergewöhnlich hoher Wert.

**Nachweis alternativer Behandlungsparameter**

(Plasmabehandlung analog Verfahren PV1, Änderungen gegenüber PV1 wie angegeben, Verklebung sofort nach Behandlung)

Tabelle 15

| Untergrund | Klebeband | Prozessgas | Abstand zur Klebemasse-oberfläche [mm] | Abstand zur Oberfläche des Untergrunds [mm] | F [N/cm] |
|---|---|---|---|---|---|
| ASTM-Stahl | K2 | ohne Behandlung | - | - | 10,70 |
| ASTM-Stahl | K2 | Luft | 5 | 8 | 33,14 |
| ASTM-Stahl | K2 | Luft | 8 | 8 | 35,85 |
| ASTM-Stahl | K2 | Luft | 11 | 8 | 33,69 |
| ASTM-Stahl | K2 | Luft | 14 | 8 | 32,87 |
| ASTM-Stahl | K2 | Luft | 17 | 8 | 32,67 |
| | | | | | |
| PP | K3 | ohne Behandlung | - | - | 4,48 |
| PP | K3 | N2 | 5 | 6 | 83,55 |
| PP | K3 | N2 | 11 | 12 | 82,63 |
| PP | K3 | N2 | 17 | 18 | 82,86 |
| | | | | | |
| PP | K3 | Luft | 5 | 6 | 79,85 |

(fortgesetzt)

| Untergrund | Klebeband | Prozessgas | Abstand zur Klebemasse-oberfläche [mm] | Abstand zur Oberfläche des Untergrunds [mm] | F [N/cm] |
|---|---|---|---|---|---|
| PP | K3 | Luft | 8 | 9 | 83,90 |
| PP | K3 | Luft | 11 | 12 | 83,21 |
| PP | K3 | Luft | 17 | 18 | 57,52 |

Hier wird nachgewiesen, dass das Verfahren robust ist gegen Variation von Abständen und Betriebsgas. Das Prozessfenster ist überraschend groß.

Bemerkenswerterweise kann bei Betrieb mit N2 ein größerer Behandlungsabstand genutzt werden als mit Luft.

**Patentansprüche**

1. Verfahren zur Erhöhung der Adhäsion zwischen einer Haftklebemassenschicht, die eine einem Substrat abgewandte und eine dem Substrat zugewandte Oberfläche aufweist, und der Oberfläche eines Substrats, wobei die dem Substrat zugewandte Oberfläche der Haftklebemassenschicht und die Oberfläche des Substrats, die mit der Haftklebemassenschicht bedeckt ist, jeweils mit Atmosphärendruckplasma behandelt werden,
wobei die Haftklebemassenschicht aus einer durch expandierbare Mikroballons geschäumten Haftklebemassenschicht aus reinem Acrylat oder mehrheitlich aus Acrylat besteht, und zwar aus einer Hotmeltmasse oder einer UV-vernetzten Masse.

2. Verfahren nach Anspruch 1,
**dadurch gekennzeichnet, dass**
folgende reine oder Mischungen von Prozessgasen eine Behandlungsatmosphäre bilden: $N_2$, Druckluft, $O_2$, $H_2$, $CO_2$, Ar, He, Ammoniak, Ethylen, wobei zudem Wasserdampf oder andere flüchtige Bestandteile zugesetzt sein können, vorzugsweise $N_2$ und Druckluft.

3. Verfahren nach Anspruch 1 oder 2,
**dadurch gekennzeichnet, dass**
die Behandlungen bei Normaldruck stattfinden.

4. Verfahren nach zumindest einem der Ansprüche 1 bis 3,
**dadurch gekennzeichnet, dass**
reaktive Aerosole in der Behandlungsatmosphäre enthalten sind oder zugesetzt werden.

5. Verfahren nach zumindest einem der vorherigen Ansprüche,
**dadurch gekennzeichnet, dass**
das Plasma mittels einer oder mehrerer Düsen aufgebracht wird.

6. Verfahren nach zumindest einem der vorherigen Ansprüche,
**dadurch gekennzeichnet, dass**
das Plasma mittels einer Rotationsdüse aufgebracht wird, besonders bevorzugt bei Betrieb mit Druckluft.

7. Verfahren nach zumindest einem der vorherigen Ansprüche,
**dadurch gekennzeichnet, dass**
bei einer Behandlung direkt vor der Verklebung der zeitliche Abstand zur Verklebung <1 s ist, bei einer Inline-Behandlung vor dem Verkleben im Bereich von Sekunden bis Minuten, bei einer Offline-Behandlung im Bereich von Stunden bis Tagen, und bei einer Behandlung im Herstellungsprozess des Klebebands im Bereich von Tagen bis vielen Monaten.

8. Verfahren nach zumindest einem der vorherigen Ansprüche,
**dadurch gekennzeichnet, dass**
eine oder beide Behandlungen aus mehreren einzelnen Behandlungsschritten besteht.

**9.** Verfahren nach zumindest einem der vorherigen Ansprüche,
**dadurch gekennzeichnet, dass**
der zeitliche Abstand zwischen Mehrfachbehandlungen von ca. 0,1 s (während der Rotation der Düse) bis hin zu 1 Jahr (wenn ein Produkt behandelt ausgeliefert wird, mit einer Auffrischbehandlung vor der Anwendung) reicht.

**10.** Verfahren nach zumindest einem der vorherigen Ansprüche,
**dadurch gekennzeichnet, dass**
die Vorbehandlung einer der relevanten Oberflächen mit einem bestimmten Plasmaerzeuger erfolgt, wobei zu einem späteren Zeitpunkt mit einem sich unterscheidenden Plasmaerzeuger die Behandlung ergänzt oder aufgefrischt wird.

**11.** Verfahren nach zumindest einem der vorherigen Ansprüche,
**dadurch gekennzeichnet, dass**
die Behandlungen der Oberfläche der Klebemasseschicht und der Oberfläche des Substrats identisch sind.

**12.** Verfahren nach zumindest einem der vorherigen Ansprüche,
**dadurch gekennzeichnet, dass**
die Haftklebemassenschicht ein trägerloses, einschichtiges, beidseitig klebendes Klebeband bildet.

**13.** Verfahren nach zumindest einem der vorherigen Ansprüche,
**dadurch gekennzeichnet, dass**
die Haftklebemassenschicht auf einem Träger aufgebracht ist, vorzugsweise auf einer Folie, einem Schaum, einem Vlies und/oder einem Gewebe, ganz besonders vorteilhaft auf einem viskoelastischen Träger.

**14.** Verfahren nach zumindest einem der vorherigen Ansprüche,
**dadurch gekennzeichnet, dass**
die Dicke der Haftklebemassenschicht oder des damit gebildeten Klebebands $\geq 20\ \mu m$, bevorzugt $\geq 100\mu m$, ganz besonders bevorzugt $\geq 300\mu m$ ist und/oder maximal $\leq 1500\ \mu m$, bevorzugt $\leq 1000\ \mu m$ ist.

**15.** Verfahren nach zumindest einem der vorherigen Ansprüche,
**dadurch gekennzeichnet, dass**
als Substrate polare wie unpolare Substrate Verwendung finden, insbesondere Stahl, Alu, Kunststoffe/Polymere wie Polyester (zum Beispiel PET), PVC, PC, PE, PP, EPDM, ABS, Gummi sowie Glas, Keramik, Lacke und Lackierungen, KTL, Compositmaterialien wie CFK, Woodcompositeproducts, beschichtete Kartonagen, Folien, Flaschen, Plastikbehälter, Verpackungen, Gehäuseteile.

**16.** Verklebung zwischen einer Haftklebemasseschicht und einem Substrat, erhalten nach zumindest einem der vorherigen Ansprüche.

**Claims**

**1.** Process for increasing the adhesion between a layer of pressure-sensitive adhesive which has a surface facing away from the substrate and which has a surface facing toward the substrate and the surface of a substrate, where that surface of the layer of pressure-sensitive adhesive that faces toward the substrate and the substrate surface covered with the layer of pressure-sensitive adhesive are respectively treated with atmospheric-pressure plasma, wherein the layer of pressure-sensitive adhesive is composed of a layer of pressure-sensitive adhesive foamed by expandable microballoons and consisting exclusively of acrylate or mostly of acrylate, and specifically of a hotmelt composition or a UV-crosslinked composition.

**2.** Process according to Claim 1,
**characterized in that**
the following pure, or mixtures of, process gases form a treatment atmosphere: $N_2$, compressed air, $O_2$, $H_2$, $CO_2$, Ar, He, ammonia, ethylene, where water vapor or other volatile constituents may also have been added, preferably $N_2$ and compressed air.

**3.** Process according to Claim 1 or 2,
**characterized in that**
the treatments take place at atmospheric pressure.

4. Process according to at least one of Claims 1 to 3, **characterized in that**
reactive aerosols are present in the treatment atmosphere or are added.

5. Process according to at least one of the preceding claims,
**characterized in that**
the plasma is applied by means of one or more nozzles.

6. Process according to at least one of the preceding claims,
**characterized in that**
the plasma is applied by means of a rotary nozzle, particularly preferably in the case of an operation using compressed air.

7. Process according to at least one of the preceding claims,
**characterized in that**
in the case of treatment directly prior to the adhesive bonding the chronological separation from the adhesive bonding is <1 s, in the case of in-line treatment prior to the adhesive bonding it is in the range from seconds to minutes, in the case of offline treatment it is in the range from hours to days, and in the case of treatment in the production process of the adhesive tape it is in the range from days to many months.

8. Process according to at least one of the preceding claims,
**characterized in that**
one or both treatments is/are composed of a plurality of individual treatment steps.

9. Process according to at least one of the preceding claims,
**characterized in that**
the chronological separation between multiple treatments varies from about 0.1 s (during the rotation of the nozzle) up to 1 year (when a product is treated before delivery and there is a refreshment treatment prior to use).

10. Process according to at least one of the preceding claims,
**characterized in that**
the pretreatment of one of the relevant surfaces uses a particular plasma generator, and at a subsequent juncture a different plasma generator is used to supplement or refresh the treatment.

11. Process according to at least one of the preceding claims,
**characterized in that**
the treatments of the surface of the layer of adhesive and of the surface of the substrate are identical.

12. Process according to at least one of the preceding claims,
**characterized in that**
the layer of pressure-sensitive adhesive forms a carrierless, single-layer, double-sided adhesive tape.

13. Process according to at least one of the preceding claims,
**characterized in that**
the layer of pressure-sensitive adhesive has been applied on a carrier, preferably on a foil, a foam, a nonwoven, and/or a textile, very particularly advantageously on a viscoelastic carrier.

14. Process according to at least one of the preceding claims,
**characterized in that**
the thickness of the layer of pressure-sensitive adhesive or of the adhesive tape formed thereby is $\geq 20\ \mu m$, preferably $\geq 100\ \mu m$, very particularly preferably $\geq 300\ \mu m$ and/or at most $\leq 1500\ \mu m$, preferably $\leq 1000\ \mu m$.

15. Process according to at least one of the preceding claims,
**characterized in that**
substrates used are polar and nonpolar substrates, in particular steel, aluminum, plastics/polymers such as polyester (for example PET), PVC, PC, PE, PP, EPDM, ABS, rubber, and also glass, ceramic, coating materials and coatings, CEC, composite materials such as CFC, wood-composite products, coated paperboard packaging materials, foils, bottles, plastics containers, packaging, and housing parts.

16. Adhesive bond between a layer of pressure-sensitive adhesive and a substrate, obtained according to at least one of the preceding claims.

**Revendications**

1. Procédé d'augmentation de l'adhésion entre une couche de masse adhésive de contact, qui comprend une surface opposée à un substrat et une surface orientée vers un substrat, et la surface d'un substrat, la surface orientée vers le substrat de la couche de masse adhésive de contact et la surface du substrat qui est recouverte avec la couche de masse adhésive de contact étant chacune traitées avec un plasma à pression atmosphérique, la couche de masse adhésive de contact étant constituée par une couche de masse adhésive de contact à base d'acrylate pur ou majoritairement à base d'acrylate, moussée par des microballons expansibles, à savoir une masse thermofusible ou une masse réticulée par UV.

2. Procédé selon la revendication 1, **caractérisé en ce que** les gaz de procédé purs suivants ou des mélanges des gaz de procédé suivants forment une atmosphère de traitement : $N_2$, l'air comprimé, $O_2$, $H_2$, $CO_2$, Ar, He, l'ammoniac, l'éthylène ; de la vapeur d'eau ou d'autres constituants volatils pouvant en outre être ajoutés, de préférence $N_2$ et l'air comprimé.

3. Procédé selon la revendication 1 ou 2, **caractérisé en ce que** les traitements ont lieu à pression normale.

4. Procédé selon au moins l'une quelconque des revendications 1 à 3, **caractérisé en ce que** des aérosols réactifs sont contenus dans ou ajoutés à l'atmosphère de traitement.

5. Procédé selon au moins l'une quelconque des revendications précédentes, **caractérisé en ce que** le plasma est appliqué par une ou plusieurs buses.

6. Procédé selon au moins l'une quelconque des revendications précédentes, **caractérisé en ce que** le plasma est appliqué par une buse rotative, de manière particulièrement préférée lors de l'exploitation avec de l'air comprimé.

7. Procédé selon au moins l'une quelconque des revendications précédentes, **caractérisé en ce que** lors d'un traitement directement avant le collage, l'intervalle temporel avant le collage est < 1 s, lors d'un traitement en ligne avant le collage dans la plage allant de secondes à minutes, lors d'un traitement hors ligne dans la plage allant d'heures à jours, et lors d'un traitement dans le procédé de fabrication de la bande adhésive dans la plage allant de jours à plusieurs mois.

8. Procédé selon au moins l'une quelconque des revendications précédentes, **caractérisé en ce qu'**un des ou les deux traitements sont constitués par plusieurs étapes de traitement individuelles.

9. Procédé selon au moins l'une quelconque des revendications précédentes, **caractérisé en ce que** l'intervalle temporel entre des traitements multiples atteint d'environ 0,1 s (pendant la rotation de la buse) jusqu'à 1 an (lorsqu'un produit est livré traité, avec un traitement de rafraîchissement avant l'utilisation).

10. Procédé selon au moins l'une quelconque des revendications précédentes, **caractérisé en ce que** le prétraitement d'une des surfaces en question a lieu avec un générateur de plasma déterminé, le traitement étant complété ou rafraîchi à un moment ultérieur avec un générateur de plasma différent.

11. Procédé selon au moins l'une quelconque des revendications précédentes, **caractérisé en ce que** les traitements de la surface de la couche de masse adhésive et de la surface du substrat sont identiques.

12. Procédé selon au moins l'une quelconque des revendications précédentes, **caractérisé en ce que** la couche de masse adhésive de contact forme une bande adhésive sans support, monocouche, collant des deux côtés.

13. Procédé selon au moins l'une quelconque des revendications précédentes, **caractérisé en ce que** la couche de masse adhésive de contact est appliquée sur un support, de préférence sur une feuille, une mousse, un non-tissé et/ou un tissu, de manière tout particulièrement avantageuse sur un support viscoélastique.

14. Procédé selon au moins l'une quelconque des revendications précédentes, **caractérisé en ce que** l'épaisseur de la couche de masse adhésive de contact ou de la bande adhésive formée avec celle-ci est ≥ 20 μm, de préférence ≥ 100 μm, de manière tout particulièrement préférée ≥ 300 μm et/ou au plus ≤ 1 500 μm, de préférence ≤ 1 000 μm.

15. Procédé selon au moins l'une quelconque des revendications précédentes, **caractérisé en ce que** des substrats polaires tout comme apolaires sont utilisés en tant que substrats, notamment l'acier, l'aluminium, des matières plastiques/polymères telles que les polyesters (par exemple le PET), le PVC, le PC, le PE, le PP, l'EPDM, l'ABS, le caoutchouc, ainsi que le verre, la céramique, les vernis et les vernissages, la peinture par immersion cathodique (KTL), les matériaux composites tels que le PRFC, les produits composites à base de bois, les cartons revêtus, les feuilles, les bouteilles, les contenants en plastique, les emballages, les parties de boîtiers.

16. Collage entre une couche de masse adhésive de contact et un substrat, obtenu selon au moins l'une quelconque des revendications précédentes.

Fig. 1

EP 2 705 103 B1

**IN DER BESCHREIBUNG AUFGEFÜHRTE DOKUMENTE**

**In der Beschreibung aufgeführte Patentdokumente**

- DE 102007063021 A1
- WO 2006027389 A1
- DE 102006057800 A1
- EP 2062951 A1
- DE 69531394 T2
- US 2010151236 A1
- WO 2005117507 A2
- EP 0761415 A1
- EP 1335641 A1
- DE 102009015233 A1
- DE 4002834 A1
- WO 2009138402 A1
- EP 2325220 A1

**In der Beschreibung aufgeführte Nicht-Patentliteratur**

- **WAGNER et al.** *Vacuum,* 2003, vol. 71, 417-436
- **BEISPIEL AKISHEV et al.** *Plasmas and Polymers,* September 2002, vol. 7 (3
- **BEISPIEL T YOKOYAMA et al.** glow discharge plasma. *J. Phys. D: Appl. Phys.,* 1990, vol. 23, 1125
- *ASTM E28-99,* 2009
- *CHEMICAL ABSTRACTS,* 6683-19-8